(19) Europäisches Patentamt
European Patent Office
Office européen des brevets

(11) **EP 3 951 560 A1**

(12) **EUROPEAN PATENT APPLICATION**
published in accordance with Art. 153(4) EPC

(43) Date of publication:
**09.02.2022 Bulletin 2022/06**

(51) International Patent Classification (IPC):
*G06F 3/01* (2006.01)    *G06F 3/023* (2006.01)
*G06F 3/0346* (2013.01)    *G06F 3/038* (2013.01)
*G06F 3/0484* (2022.01)

(21) Application number: 20778183.2

(22) Date of filing: 06.03.2020

(52) Cooperative Patent Classification (CPC):
**G06F 3/01; G06F 3/023; G06F 3/0346;**
**G06F 3/038; G06F 3/0484**

(86) International application number:
**PCT/JP2020/009681**

(87) International publication number:
**WO 2020/195709 (01.10.2020 Gazette 2020/40)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: 28.03.2019 JP 2019063898

(71) Applicant: **Sony Group Corporation**
**Tokyo 108-0075 (JP)**

(72) Inventors:
• **YASUDA, Ryouhei**
**Tokyo 108-0075 (JP)**
• **NODA, Takuro**
**Tokyo 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INFORMATION PROCESSING DEVICE, INFORMATION PROCESSING METHOD, AND PROGRAM**

(57)    An information processing apparatus includes a detecting unit (12) that detects, based on line of sight information that indicates a line of sight of a user, a gaze point of a user on a plurality of key objects that are used to input information and that are displayed by a display unit (11); and a control unit (15) that controls the display unit (11) to display, by using a position of the detected gaze point as a reference, input candidate information that is associated with at least one of the plurality of key objects and that is selected based on the gaze point.

FIG.1

EP 3 951 560 A1

**Description**

Field

The present disclosure relates an information processing apparatus, an information processing method, and a program.

Background

Patent Literature 1 discloses an input method for detecting a line of sight of a user in a first display area, selecting a character or a sign corresponding to the position of the line of sight of the user in the first display area, and displaying the character or the sign at the position of the line of sight of the user in a second display area.

Citation List

Patent Literature

Patent Literature 1: JP 11-249804 A

Summary

Technical Problem

In the conventional technology described above, when the user checks an input result, the user needs to move the position of the line of sight to a display area in which the input result is displayed. Accordingly, in the technology for checking the input result, it is desired to reduce a physical load of the user.
Accordingly, in the present disclosure, an information processing apparatus, an information processing method, and a program capable of reducing a physical load of a user and checking an input result are proposed.

Solution to Problem

To solve the problems described above, an information processing apparatus includes: a detecting unit that detects, based on line of sight information that indicates a line of sight of a user, a gaze point of the user on a plurality of key objects that are used to input information and that are displayed by a display unit; and a control unit that controls the display unit to display, by using a position of the detected gaze point as a reference, input candidate information that is associated with at least one of the plurality of key objects and that is selected based on the gaze point.
Moreover, an information processing method that causes a computer to execute a process includes: detecting, based on line of sight information that indicates a line of sight of a user, a gaze point of the user on a plurality of key objects that are used to input information and that are displayed by a display unit; and controlling the display unit to display, by using a position of the detected gaze point as a reference, input candidate information that is associated with at least one of the plurality of key objects and that is selected based on the gaze point.
Moreover, a program that causes a computer to execute a process includes: detecting, based on line of sight information that indicates a line of sight of a user, a gaze point of the user on a plurality of key objects that are used to input information and that are displayed by a display unit; and controlling the display unit to display, by using a position of the detected gaze point as a reference, input candidate information that is associated with at least one of the plurality of key objects and that is selected based on the gaze point.

Brief Description of Drawings

FIG. 1 is a diagram illustrating an example of an information processing method according to a first embodiment.

FIG. 2 is a diagram illustrating an example of display control of a head-mounted display according to the first embodiment.

FIG. 3 is a diagram illustrating a configuration example of the head-mounted display according to the first embodiment.

FIG. 4 is a flowchart illustrating an example of the flow of a process performed by the head-mounted display according to the first embodiment.

FIG. 5 is a diagram illustrating an example of an information processing method according to a first modification of the first embodiment.

FIG. 6 is a diagram illustrating an example of an information processing method according to a second modification of the first embodiment.

FIG. 7 is a diagram illustrating an example of a display mode of input candidate data according to the second modification of the first embodiment.

FIG. 8 is a diagram illustrating a display example of input candidate data according to a third modification of the first embodiment.

FIG. 9 is a diagram illustrating a display example of input candidate data according to the third modification of the first embodiment.

FIG. 10 is a diagram illustrating a display example of input candidate data according to the third modification of the first embodiment.

FIG. 11 is a diagram illustrating a display example of input candidate data according to the third modification of the first embodiment.

FIG. 12 is a diagram illustrating a display example of input candidate data according to the third modification of the first embodiment.

FIG. 13 is a diagram illustrating a display example of input candidate data according to the third modification of the first embodiment.

FIG. 14 is a diagram illustrating a display example of input candidate data according to the third modification of the first embodiment.

FIG. 15 is a diagram illustrating an example of an information processing method according to a second embodiment.

FIG. 16 is a diagram illustrating an example of an information processing method according to a third embodiment.

FIG. 17 is a diagram illustrating an example of a hardware configuration of a computer that implements a function of an information processing apparatus.

Description of Embodiments

Preferred embodiments of the present disclosure will be explained in detail below with reference to the accompanying drawings. Furthermore, in each of the embodiments, components having the same functions are assigned the same reference numerals and descriptions of overlapping portions will be omitted.

(First Embodiment)

[Configuration of information processing apparatus according to first embodiment]

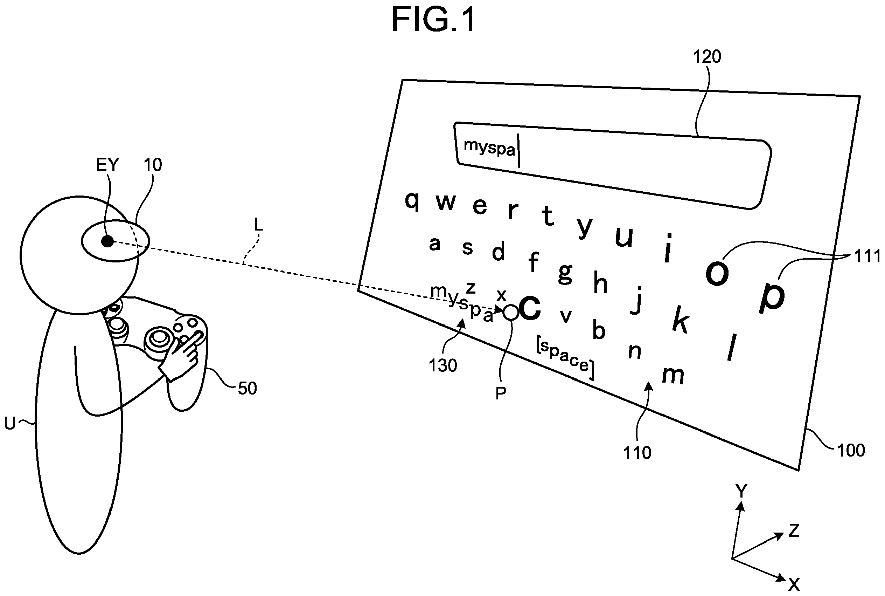

FIG. 1 is a diagram illustrating an example of an information processing method according to a first embodiment. As illustrated in FIG. 1, a head-mounted display (HMD) 10 is an example of an information processing apparatus that is mounted on the head of a user U and in which a generated image is displayed on a display in front of the user U. A description will be given of a case in which the HMD 10 is a shielding type that covers the entire field of view of the user U; however, the HMD 10 may also be an open type that does not cover the entire field of view of the user U. Here, in FIG. 1, an X axis indicates a horizontal direction, a Y axis indicates a vertical direction, and a Z axis indicates a front-back direction of the user U.

The HMD 10 has a configuration capable of performing wireless communication with an operation input unit 50. The operation input unit 50 has a function for, for example, inputting an operation performed by the user U. The operation input unit 50 includes an input device, such as a controller of a game machine, a hardware button, or a touch panel. The operation input unit 50 sends information that indicates an operation result obtained by the user U to the HMD 10. Furthermore, the operation input unit 50 may also send the information to the HMD 10 via, for example, the game machine. The operation input unit 50 may also be integrated with the HMD 10 as a single unit.

The HMD 10 has a function for stereoscopically displaying an input screen 100 in a virtual space. More specifically, the HMD 10 has a function for adjusting a display position of an image for a left eye and image for a right eye and prompting the user to adjust convergence. Namely, the HMD 10 has a function for stereoscopically showing the input screen 100 to the user U. The HMD 10 has an input function for inputting characters, symbols, or the like in combination with a movement of the line of sight of the user U on the input screen 100 and an operation performed with respect to the operation input unit 50. For example, the HMD 10 displays the input screen 100 in the discrimination field of view of the user U. The discrimination field of view is a field of view in a range in which a person is able to recognize the shape or content of a certain type of display object. For example, the HMD 10 displays the input screen 100 in front of the user U and detects an input candidate point P on the input screen 100 based on the line of sight information of the user U. In the present disclosure, it may be assumed that the input candidate point P corresponds to a gaze point of the user. Furthermore, in the embodiment, a description will be given of a case in which the HMD 10 displays the input candidate point P on the input screen 100; however, the input candidate point P need not always be displayed on the input screen 100.

In the example illustrated in FIG. 1, the input screen 100 includes a keyboard 110 and an input field 120. The keyboard 110 includes a plurality of key objects 111 (a plurality of pieces of input candidate information). The plurality of the key objects 111 includes software keys for inputting information. As illustrated in FIG. 1, the input screen 100 is a virtual plane that is set in a virtual space and that includes the plurality of the key objects 111. In the embodiment, a description will be given of a case in which the keyboard 110 is a QWERTY layout keyboard; however, the keyboard 110 is not limited to this. The input field 120 is displayed in a display area that is different from the display area of the keyboard 110 on the input screen 100. More specifically, the input field 120 is displayed outside the display range of the plurality of the key objects 111. In the input field 120, an input candidate selected by the keyboard 110 is displayed. Furthermore, the selected key object 111 may also be simultaneously displayed in the input field 120 and in the vicinity of the input candidate point P. The input candidate includes data, such as a character string, a character, a symbol, a figure, or a pictorial symbol. Furthermore, the plurality of key objects in the present disclosure is not limited to a typical software keyboards. The plurality of key objects may also be a plurality of selection choice objects that are consecutively selected by the user, and may also be discretely and arbitrarily arranged.

The HMD 10 has a function for detecting the input candidate point P based on the line of sight information that indicates the line of sight of the user U. Namely, the HMD 10 includes a line of sight input interface. The line of sight information is data that indicates a line of sight L of the user U. Examples of the line of sight information according to the embodiment include "data that indicates a position of the line of sight L of the user U" or "data that can be used to specify the position of the line of sight L of the user U (or, data that can be used to estimate the position of the line of sight of the user)".

An Example of data that indicates the position of the line of sight L of the user U includes "coordinate data that indicates the position of the line of sight L of the user U on the input screen 100". The position of the line of sight L of the user U on the input screen 100 is represented by the coordinates in a coordinate system in which, for example, a reference position on the input screen 100 is the origin. The reference position on the input screen 100 according to the embodiment may also be, for example, a fixed position that is set in advance or a position that is able to be set based on an operation or the like performed by a user.

In the embodiment, if information related to the line of sight L of the user U is coordinate data that indicates a position of the line of sight L of the user U on the input screen 100, the HMD 10 estimates the position of the line of sight L of the user U by using, for example, a technology for detecting a line of sight, and then, calculates the coordinate data that indicates the position of the line of sight L of the user U on the input screen 100. Then, the HMD 10 sets the calculated coordinate data to be the input candidate point P on the input screen 100.

An example of the technology for detecting a line of sight according to the embodiment includes a method for detecting the line of sight L based on a position of a moving point of the eye (for example, a point corresponding to a moving portion of the eye, such as an iris or a pupil) with respect to a reference point of an eye (for example, a point corresponding to a portion of the eye that does not move, such as the inner corner of the eye or corneal reflection). Furthermore, the technology for detecting the line of sight according to the embodiment is not limited to the method described above. For example, the HMD 10 according to the embodiment is also able to detect the line of sight of the user U by using an arbitrary technology for detecting the line of sight that uses a "corneal reflection technique", such as a "pupil corneal reflection technique", a "scleral reflection technique", an "active appearance model (AAM) that follows feature points obtained from an eye, a nose, a mouth or the like after detecting a face", or the like.

Furthermore, the data that indicates the position of the line of sight L of the user U according to the embodiment is not limited to "the coordinate data that indicates the position of the line of sight L of the user U on the input screen 100" described above.

For example, in a case in which the user U wears a transparent-type eyewear device, the data that indicates the position of the line of sight L of the user U according to the embodiment may also be "the coordinate data that indicates the position of the real object that is present in the real space viewed by the user U".

The position of the real object present in the real space viewed by the user U is specified (or estimated) based on, for example, a three-dimensional image of the real object and a line of sight vector that is specified (or estimated) by using the technology for detecting the line of sight. Furthermore, the method for specifying the position of the real object present in the real space viewed by the user U is not limited to the method described above and it is possible to use an arbitrary technique capable of specifying the position of the real object present in the real space viewed by the user U.

If the information related to the position of the line of sight L of the user U according to the embodiment is the coordinate data that indicates the position of the real object present in the real space viewed by the user U, the HMD 10 (information processing apparatus) acquires the coordinate data that indicates, for example, the position of the real object present in the real space viewed by the user U from an external device. The real object includes, for example, a photograph of the keyboard, a real keyboard, or the like. Furthermore, the information processing apparatus is also able to acquire the coordinate data that indicates a position of the real object present in the real space viewed by the user by specifying (or estimating) the position of the real object present in the real space viewed by the user U by using, for example, a technology for detecting a line of sight.

Furthermore, an example of data that can be used to specify the position of the line of sight L of the user U according to the embodiment includes, for example, a captured image data obtained by capturing the direction of an image to be displayed on the input screen 100 (a captured image data obtained by capturing, from the position on the display screen side, the opposite direction to the display screen). Furthermore, the data that is able to be used to specify the position of the line of sight L of the user U according to the embodiment may also further include detection data detected by an arbitrary sensor that obtains a detection value that is able to be used to improve accuracy of estimation of the position of the line of sight of the user, such as detection data detected by an infrared sensor that detects infrared light in the direction in which the image is displayed on the input screen 100.

Furthermore, the data that can be used to specify the position of the line of sight L of the user U according to the embodiment may also be data related to, for example, a three-dimensional image of the real object and the line of sight vector of the user U. For example, in a case of using the data that can be used to specify the position of the line of sight L of the user U, the HMD 10 according to the embodiment performs a process according to a method for specifying, for example, the position of the line of sight L of the user U according to the embodiment described above, and then, specifies (or estimates) the position of the line of sight L of the user U.

In the example illustrated in FIG. 1, when the user U inputs a character string of "myspace", the user U has completed an input of characters up to "myspa" and is going to select a character of "c" by moving the line of sight L. In this case, when the HMD 10 detects the input candidate point P on the input screen 100, the HMD 10 displays the key object 111 of "c" on the input screen 100 indicated by the input candidate point P by using the size that is greater than that of the other key objects 111. Furthermore, the HMD 10 may also change a display color of the key object 111 indicated by the input candidate point P, a display mode, or the like. Then, the HMD 10 displays, on the input screen 100, an input candidate data 130 that indicates an input candidate that has been selected until now by using the input candidate point P as a reference. Furthermore, in the present disclosure, the input candidate data is sometimes referred to as input candidate information. In this case, the input candidate data 130 corresponds to data indicating "myspa" that has been input (selected). Then, the HMD 10 displays the input candidate data 130 that indicates the character string of "myspa" having five characters so as to be capable of being distinguished from the key object 111. For example, the HMD 10 displays the input candidate data 130 in a distinguishable manner from the character string and the key object 111 by using a color that is different from that of the key object 111. For example, the HMD 10 may also display the input candidate data 130 by using a font, a font size, or the like that is different from that of the key object 111.

In the embodiment, the HMD 10 arranges the input candidate data 130 at a position closer to the user U than the keyboard 110, i.e., the key object 111, in the depth direction viewed from the user U. Therefore, the user U is able to move the gaze point from the keyboard 110 toward the input candidate data 130 by slightly moving the gaze point in the vertical direction or the horizontal direction while adjusting convergence.

In the embodiment, the HMD 10 displays the input candidate data 130 so as to follow the input candidate point P. For example, the HMD 10 may also move the input candidate data 130 that is displayed along the route of the movement of the input candidate point P on the input screen 100. Alternatively, the HMD 10 may also practically and linearly move the input candidate data 130 from the starting point to the end point of the input candidate point P while giving a delay to the movement of the input candidate point P. By displaying the input candidate data 130 in this way, the input candidate data 130 is not temporarily displayed in the vicinity of the input candidate point P in a predetermined period of delay time after the input candidate point P is moved. Accordingly, the user U is able to appropriately ensure the field of view due to the movement of the input candidate point P.

The HMD 10 displays the input candidate data 130 in the vicinity of the input candidate point P, which is at a stop, so as to be superimposed on the keyboard 110. The input candidate data 130 is set based on a known field-of-view characteristic of humans. In the present disclosure, the vicinity of the input candidate point P may also be regarded as a range that is set based on the field-of-view characteristic of humans. For example, the input candidate data 130 is able to be set based on a word identification limit that is a readable limit range of characters for humans. The word identification limit is set based on, for example, the distance from the position of an eyeball EY of the user U to the input candidate point P. Furthermore, it may also be assumed that the range indicated by the word identification limit corresponds to the vicinity of the input candidate point P. The input candidate data 130 is displayed in the vicinity of the input candidate point P by the number of characters corresponding to a range in which the user U who gazes at the input candidate point P is able to read the characters. Furthermore, the vicinity of the input candidate point P includes, for example, a display area on the input screen 100 in a range within a readable limit of characters from the input candidate point P for humans.

The user U is referring to the input candidate data 130 of "myspa" that is located on the key object 111 of "c" on the input screen 100 and that is displayed in the vicinity of the input candidate point P. Furthermore, the user U performs a selection operation on the operation input unit 50 in order to select the key object 111 of "c" as an input candidate. The selection operation includes, for example, a press of a determination button, a gesture of the user U, or the like. In this case, if the HMD 10 detects the selection operation of the key object 111 of "c" via the operation input unit 50, the HMD 10 receives the character of "c" as the input candidate. Then, the HMD 10 allows the input candidate data 130 of the selected "myspac" to follow the input candidate point P on the input screen 100. The HMD 10 displays the input candidate indicated by the input candidate data 130 into the input field 120 on the input screen 100.

In the embodiment, if the HMD 10 displays the input candidate data 130 on the keyboard 110 on the input screen 100, the HMD 10 also displays the selected input candidate into the input field 120 on the input screen 100; however, the embodiment is not limited to this. For example, if the HMD 10 displays the input candidate data 130, the HMD 10 does not need to display the same input candidate as the input candidate data 130 in the input field 120. Then, when an input of the input candidate data 130 has been defined, the HMD 10 may also display the defined input data into the input field 120. In the present disclosure, the vicinity of the input candidate point P may also be regarded as a second input field that temporarily indicates only the input candidate information that has been selected but that has not been defined.

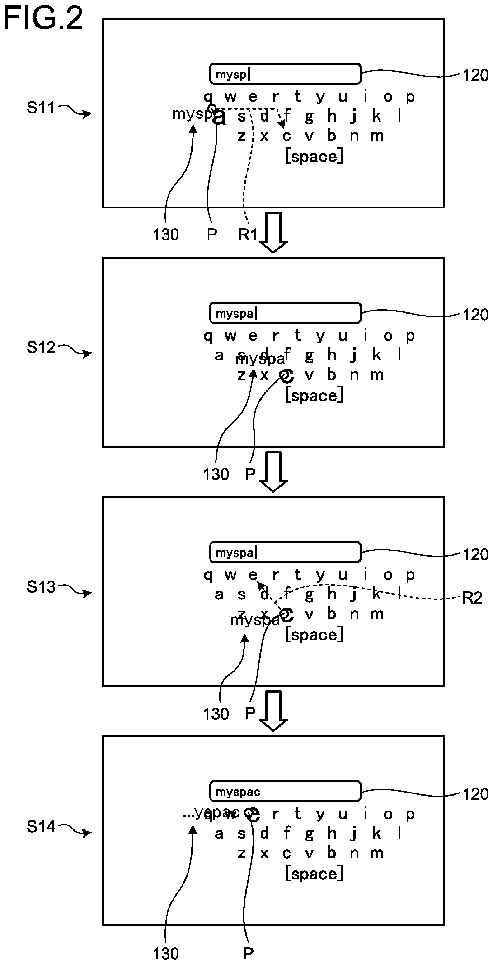

FIG. 2 is a diagram illustrating an example of display control of the head-mounted display 10 according to the first embodiment. At Step S11 illustrated in FIG. 2, when the user U inputs the character string of "myspace", the user U has completed the input of characters up to "mysp". "mysp" are arranged in the order in which the characters are selected. In FIG. 2, "mysp" are arranged in the horizontal direction. Furthermore, the arrangement direction of the selected input candidate data 130 may also be appropriately decided in accordance with an input language. For example, if an input language is English, the HMD 10 disposes the input candidate data 130 on the left side of the gaze point. The arrangement direction of the input candidate data 130 may correspond to a predetermined direction in the present disclosure. In FIG. 2, the HMD 10 displays the (plurality of pieces of) selected input candidate data 130 so as to follow the input candidate point P of the input screen 100. Then, the HMD 10 displays the input candidate indicated by the input candidate data 130 into the input field 120 on the input screen 100. Consequently, the user U is able to check the currently selecting input candidate by referring to the input candidate data 130 that is located in the vicinity of the input candidate point P, so that the user U does not need to move the line of sight L from the input candidate point P to the input field 120.

At Step S11, the user U moves the line of sight L in accordance with a route R1 in order to select the key object 111 of "a" as a next input candidate. The route R1 is a route that sequentially moves the line of sight L from, for example, the key object 111 of "a" to the key objects 111 of "s", "d", and "f", and then moves to the key object 111 of "c". Here, from among "mysp", "p" that indicates the latest input candidate data 130 is displayed so as to be adjacent to the key object that is associated with the current position of the input candidate point P. Therefore, the user U is able to easily and visually recognize the input candidate data 130 that indicates "a" that is going to be selected by the user U. Furthermore, please note that "be adjacent to" mentioned in the present disclosure includes "to dispose in the vicinity at an interval" and "to dispose in the vicinity without an interval".

At Step S12, the HMD 10 displays the input candidate data 130 that indicates the input candidate of "myspa" that is being selected so as to follow the input candidate point P on the input screen 100. More specifically, the HMD 10 superimposes at least a part of the displayed "myspa" including an end portion of "myspa" onto the key objects 111 of "s", "d", and "f" that are adjacent to the key object 111 of "c". Then, the HMD 10 displays the input candidate of "myspa" indicated by the input candidate data 130 into the input field 120 on the input screen 100. Then, if the input candidate point P is moving the route R1, the HMD 10 displays the input candidate data 130 so as to follow the input candidate point P in accordance with the route R1 on which the input candidate point P moves. In the example indicated at Step S12, the HMD 10 displays the input candidate data 130 along the route R1 between the key object 111 of "f" and the key object 111 of "c", as viewed from the input candidate point P as a reference. The HMD 10 displays the input candidate data 130 in the vicinity of the input candidate point P starting from the route R1 as the starting point.

At Step S13, the user U refers to the input candidate data 130 of "myspa" that is displayed in the vicinity of the input candidate point P that is positioned at the key object 111 of "c" on the input screen 100. Then, the user U performs a selection operation on the operation input unit 50 in order to select the key object 111 of "c" as an input candidate. Then, when the user U completes the selection operation, the user U moves the line of sight L in accordance with a route R2 in order to select the key object 111 of "e" as a next input candidate.

In this case, when the HMD 10 detects the selection operation of the key object 111 of "c" via the operation input unit 50, the HMD 10 receives the character of "c" as an input candidate. Then, the HMD 10 displays the input candidate data 130 that indicates the input candidate of "myspac", which is being select, on the input screen 100 by using the input candidate point P as a reference.

In the embodiment, the HMD 10 limits the number of characters indicated by the input candidate data 130 (the number of pieces of data or an amount of data) to five characters and abbreviates (or deletes) the input candidate data 130 that is not able to be identified from the position of the input candidate point P that is used as a reference. The number of pieces of data or an amount of data related to the limit of the input candidate data 130 to be displayed is an example of a predetermined condition related to the line of sight information in the present disclosure. Then, at Step S14, the number of characters of the input candidate data 130 is six characters of "myspac" and exceeds the set number of characters to be displayed, so that the HMD 10 abbreviates and displays the input candidate data 130 by using an abbreviation symbol. For example, as illustrated at Step S14, the HMD 10 displays the input candidate data 130 of "...yspac" that indicates the portion of excess characters other than five characters so as to follow to the input candidate point P. The abbreviation of the input candidate data 130 is sequentially applied from the older input candidate data 130. In contrast, the HMD 10 displays the input candidate of "myspac" indicated by the input candidate data 130 on the input field 120 on the input screen 100 without abbreviation. Consequently, the user U is able to check the input candidate that is immediately before the currently selecting input candidate by referring to the input candidate data 130 that is in the vicinity of the input candidate point P, so that the user U does not need to move the line of sight L from the input candidate point P to the input field 120.

For example, at Step S14, it is assumed that the user U does not perform the selection operation of an input candidate by using the operation input unit 50. In this case, if a state in which a next input candidate is not selected after the input candidate data 130 is displayed is continued for a predetermined time, the HMD 10 automatically deletes at least a part of the displayed input candidate data 130 from the input screen 100. The predetermined time related to the limit of the input candidate data 130 to be displayed is an example of the predetermined condition related to the line of sight information in the present disclosure. The predetermined time includes, for example, several seconds, several minutes, or the like. The predetermined time can be set based on an average time interval at the time of an input of a single word operated by the user U. In the embodiment, the predetermined time is, for example, two seconds based on the average time of an input performed by the user U. Accordingly, if an unselected state is continued for two seconds, the HMD 10 causes the input candidate data 130 to fade out from the input screen 100. Then, the HMD 10 maintains the display of the input candidate in the input field 120 even after the HMD 10 deletes the input candidate data 130 from the input screen 100.

Furthermore, in the embodiment, a description will be given of a case in which the HMD 10 controls deletion of the input candidate data 130 based on presence or absence of a selection operation performed by the user U; however, the embodiment is not limited to this. For example, the HMD 10 may also control deletion of the input candidate data 130 based on presence or absence of the line of sight L of the user U, based on whether the line of sight L is moving toward the input screen 100, or the like. For example, if at least one of an amount of movement from the key object 111 that is gazed at by the line of sight L of the user U, a moving speed, and a moving acceleration is greater than or equal to a threshold, the HMD 10, at least, temporarily deletes the input candidate data 130.

As described above, the HMD 10 according to the first embodiment displays the input candidate data 130 that indicates the input candidate selected on the basis of the input candidate point P of the user U by using the input candidate point P as a reference. More specifically, the HMD 10 displays the input candidate data 130 in the vicinity of the input candidate point P of the user U and allows the user U to be easily aware of an erroneous input. By allowing the user U to simply referring to the input candidate data 130, the HMD 10 is able to reduce an amount of movement of the line of sight L of the user U when compared with a case of moving the line of sight L to the input field 120. For example, even if the HMD 10 increases the display size on the input screen 100 or separately disposes the keyboard 110 and the input field 120, the HMD 10 is able to reduce an amount of movement of the line of sight L of the user U. Consequently, by reducing the amount of the line of sight L of the user U to the input candidate data 130, the HMD 10 is able to allow the user U to check the input result by reducing a physical load applied to the user U.

Furthermore, the HMD 10 displays the input candidate data 130 so as to follow the input candidate point P. Accordingly, even if the input candidate point P of the user U is moved, the HMD 10 is able to display the input candidate data 130 in the vicinity of the input candidate point P. Consequently, by moving the display position of the input candidate data 130 in accordance with the movement of the line of sight L of the user U, the HMD 10 is able to reduce an amount of movement of the line of sight L that is performed in order to check the input result.

Furthermore, the HMD 10 limits the number of pieces of data of the input candidate data 130 that is allowed to follow the input candidate point P. Accordingly, the HMD 10 is able to limit the number of pieces of data of the input candidate data 130 that is displayed in the vicinity of the input candidate point P, so that the HMD 10 is able to reduce the number of the other key objects 111 on which the input candidate data 130 superimposes. Consequently, even if the HMD 10 operates a follow-up display of the input candidate data 130, the HMD 10 is able to appropriately ensure the field of view of the user U.

Furthermore, if the number of pieces of data of the input candidate data 130 reaches an upper limit, the HMD 10 abbreviates a part of the input candidate data 130 that is allowed to follow the input candidate point P. Namely, if the number of pieces of the selected input candidate data 130 is greater than the upper limit, the HMD 10 limits the number of pieces of the input candidate data 130, which is actually to be displayed, to less than or equal to the upper limit. Accordingly, the HMD 10 is able to partially display the input candidate data 130 in the reverse direction of the input candidate that is selected by the user U last time. Consequently, the HMD 10 is able to appropriately ensure the field of view of the user U and allow the user U to check the input candidate, so that the HMD 10 is able to improve convenience.

Furthermore, if the state in which the next input candidate is not selected after the input candidate data 130 is displayed is continued for a predetermined time, the HMD 10 automatically deletes the input candidate data 130 from the input screen 100. Accordingly, the HMD 10 is able to prevent the key object 111, which is currently visually recognized by the user U, and the object that is displayed in the vicinity of the key object 111 from being visually recognized due to the input candidate data 130. Consequently, the HMD 10 is able to prevent the field of view of the user U from being blocked by the input candidate data 130, and is thus able to improve the operability using the line of sight L.

Furthermore, the HMD 10, at least, temporarily deletes the input candidate data 130 in accordance with the movement of the line of sight L of the user U. Accordingly, in a circumstance in which it is assumed that the user U attempts to view a display object other than the key object 111 and the input candidate data 130, it is possible to prevent the field of view of the user U from being obstructed. Consequently, the HMD 10 is able to prevent the field of view of the user U from being obstructed by the input candidate data 130 and thus is able to improve the operability using the line of sight L.

Furthermore, the HMD 10 displays the input candidate data 130 that is selected based on the input candidate point P such that the selected input candidate data 130 is adjacent to one of the plurality of the key objects 111 associated with the current position of the detected input candidate point P (gaze point). More specifically, the HMD 10 displays the plurality of the key objects 111 that is to be selected by the user U on the input screen 100 and superimposes the selected input candidate data 130 on the key object 111. This display state of the key object 111 is sometimes simply referred to as a superimposed display. Accordingly, the HMD 10 is able to display the key object 111 so as to be associated with the input candidate data 130. Consequently, when the user U visually recognizes the superimposed display of the input candidate data 130 and the key object 111, the HMD 10 is able to make the user U intuitively understand a relationship with the input candidate that was selected in the past. Therefore, it is possible to improve the visibility of the virtual object relevant to a line of sight input, such as the input candidate data 130 or the key object 111.

Furthermore, the HMD 10 displays the input field 120 at the display position of the input screen 100 that is different from the positions of the plurality of the key objects 111 and displays the input candidate that is selected based on the input candidate point P into the input field 120. Accordingly, the HMD 10 is able to separately display the plurality of the key objects 111 and the input field 120, so that the HMD 10 is able to give a degree of freedom of the design of the input screen 100 and thus is able to increase the size of the input screen 100. Consequently, the HMD 10 is able to reduce a physical load of the user U and thus is able to improve design.

Furthermore, even if the HMD 10 deletes the input candidate data 130 that is superimposed on the key object 111 of the input screen 100, the HMD 10 maintains the display of the input candidate of the input field 120. Accordingly, this allows the HMD 10 to simply and temporarily display the input candidate data 130 on the key object 111, so that the HMD 10 is able to reduce the time needed for the input candidate data 130 to be superimposed on the key object 111. Consequently, the HMD 10 is able to prevent a decrease in visibility of a virtual object that is present around the input candidate point P due to the input candidate data 130.

Furthermore, the HMD 10 detects, based on the operation result of the operation input unit 50 operated by the user U, that the input candidate indicated by the input candidate point P has been selected. Accordingly, by distinguishing the operation performed by the line of sight of the user U from the selection operation of the input candidate performed by the operation input unit 50, the HMD 10 does not need to detect the selection operation by the line of sight L. Consequently, the HMD 10 is able to reduce an amount of the movement of the line of sight L of the user U and thus improve the operability of an input technique used in combination with the line of sight L of the user U and an operation by the operation input unit 50.

[Configuration example of head-mounted display according to first embodiment]

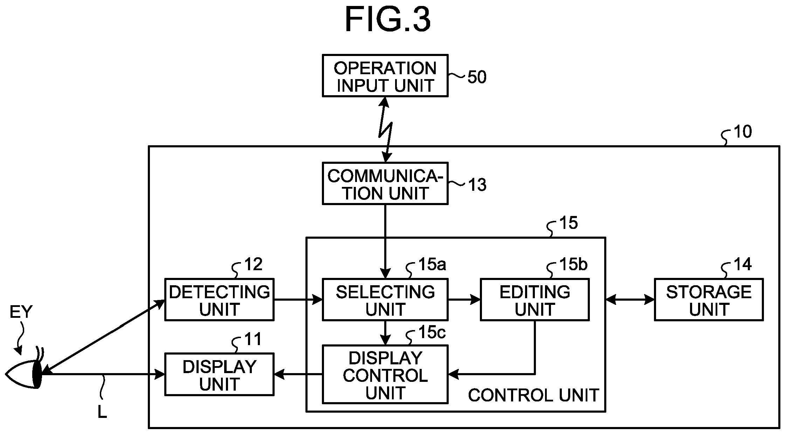

In the following, as an example of the information processing apparatus according to the first embodiment, a configuration of the head-mounted display (HMD) 10 will be described. FIG. 3 is a diagram illustrating a configuration example of the head-mounted display 10 according to the first embodiment. As illustrated in FIG. 3, the HMD 10 includes a display unit 11, a detecting unit 12, a communication unit 13, a storage unit 14, and a control unit 15.

The display unit 11 includes one or a plurality of display devices. The display device includes, for example, a liquid crystal display (LCD), an organic electro-luminescence (EL) display (OELD), or the like. The display unit 11 displays various kinds of information controlled by the control unit 15. The various kinds of information includes, for example, information displayed on the input screen 100 described above. The display unit 11 implements a three-dimensional representation using the parallax of both eyes by displaying, for example, an image associated with each of the eyeballs EY of the user U at the time of wearing the head-mounted display (HMD). Then, the display unit 11 displays the input screen 100 in three dimensions.

The detecting unit 12 detects the input candidate point P of the plurality of the key objects 111 based on the line of sight information that indicates the line of sight of the user U. The detecting unit 12 estimates the line of sight L of the user U by using a known method for estimating a line of sight. For example, when the detecting unit 12 estimates the line of sight L by using a pupil corneal reflection technique, the detecting unit 12 uses a light source and a camera. Then, the detecting unit 12 analyzes an image of an eyeball EY of the user U captured by the camera, detects a bright spot or a pupil, and generates bright spot related information that includes information related to a position of the bright spot and the pupil related information that includes information related to a position of the pupil. Then, the detecting unit 12 detects (estimates) the line of sight L (optical axis) of the user U based on the bright spot related information, the pupil related information, and the like. Then, the detecting unit 12 detects, based on the positional relationship in a three-dimensional space of the display unit 11 and the eyeballs of the user U, the coordinates in which the line of sight L of the user U intersects with the display unit 11 as the input candidate point P. The detecting unit 12 detects a distance from the input screen 100 to a point-of-view position (eyeball) of the user U. The detecting unit 12 outputs the detection result to the control unit 15.

The communication unit 13 performs communication in a wireless manner. The communication unit 13 supports a near field wireless communication system. The communication unit 13 has a function for performing wireless communication with the operation input unit 50, an external device, or the like by sending and receiving information. The communication unit 13 sends the information received from the control unit 15 to the operation input unit 50, the external device, or the like. The communication unit 13 outputs the information received from the operation input unit 50, the external device, or the like to the control unit 15.

The storage unit 14 stores therein various kinds of data and programs. For example, the storage unit 14 is able to store the detection result obtained by the detecting unit 12. The storage unit 14 is electrically connected to, for example, the detecting unit 12, the control unit 15, and the like. The storage unit 14 stores therein, for example, data related to the input screen 100, the input candidate data 130 described above, input data that has been defined to be input, and the like. The storage unit 14 is, for example, a semiconductor memory device, such as a RAM or a flash memory, a hard disk, an optical disk, or the like. Furthermore, the storage unit 14 may also be provided in a cloud server that is connected to the HMD 10 via a network.

The control unit 15 performs control of the HMD 10, such as the display unit 11. The control unit 15 is implemented by a central processing unit (CPU), a micro processing unit (MPU), or the like. The control unit 15 may also be implemented by an integrated circuit, such as an application specific integrated circuit (ASIC), a field programmable gate array (FPGA), or the like.

The control unit 15 includes functioning units, such as a selecting unit 15a, an editing unit 15b, and a display control unit 15c. The control unit 15 functions as the selecting unit 15a, the editing unit 15b, and the display control unit 15c by executing the programs.

When the selecting unit 15a detects a selection operation performed by the user U via the operation input unit 50, the selecting unit 15a selects an input candidate of the key object 111 indicated by the input candidate point P detected by the detecting unit 12. The selecting unit 15a outputs the selection result to the editing unit 15b, the display control unit 15c, and the like. The selection result includes, for example, information that indicates the selected input candidate, the key object 111, or the like.

The editing unit 15b edits the input candidate data 130 based on the input candidate selected by the selecting unit 15a. If the input candidate data 130 is not present, the editing unit 15b newly generates the input candidate data 130 that indicates the selected input candidate and stores the generated input candidate data 130 in the storage unit 14. If the input candidate data 130 is already present, i.e., if the input candidate data 130 is displayed on the input screen 100, the editing unit 15b edits the selected input candidate by adding selected input candidate to the input candidate data 130 stored in the storage unit 14.

The display control unit 15c has a function for displaying the input candidate data 130 that indicates the input

9

candidate selected based on the input candidate point P that is detected by the detecting unit 12 by using the input candidate point P as a reference. For example, the display control unit 15c displays the input candidate data 130 in the vicinity of the input candidate point P in a set display mode. The display mode includes, for example, a display position by using the input candidate point P as a reference, a display size, a display color, or the like. The display position includes, for example, a position on the left side, on the upper side, or the circumference of the input candidate point P. The display mode includes, for example, a state in which the input candidate point P is moving or a state in which the input candidate point P stops moving.

The display mode is able to change the character size in accordance with the distance from the point-of-view position of the user U (position of the eyeball) to the input screen 100 in order to guarantee the visibility of the input candidate data 130 that uses a superimposed display. The display mode is determined by setting a character size such that, for example, the angle formed by the character viewed from the point-of-view position is a predetermined degree. The formed angle indicates the angle formed between, for example, one end of the character viewed from the point-of-view position to the other end thereof. For example, the angle formed by a character of a Japanese kanji is 25 minutes of arc, the character size is set to 2.2 mm when the distance is 300 mm, whereas the character size is set to 2.9 mm when the distance is 400 mm. For example, if the angle formed by a character of an alphabet is 16 minutes of arc, the character size is set to 1.3 mm when the distance is 300 mm, whereas the character size is set to 1.8 mm when the distance is 400 mm. In this way, the HMD 10 superimposes the input candidate data 130 on the input screen 100 in the character size that guarantees the visibility of the input candidate data 130. Furthermore, the HMD 10 may also store a calculation formula, a table, or the like that is used to obtain the character size based on the distance from the point-of-view position, and, if the distance is changed, the HMD 10 may also change the size of the input candidate data 130 to the character size in accordance with the distance.

The display control unit 15c has a function for allowing the input candidate data 130 to follow the input candidate point P. The display control unit 15c has a function for controlling the number of pieces of data of the input candidate data 130 that is allowed to follow the input candidate point P. The display control unit 15c has a function for abbreviating, if the number of pieces of the data of the input candidate data 130 reaches the upper limit, a part of the input candidate data 130 that is allowed to follow the input candidate point P. The display control unit 15c has a function for deleting, if a state in which a next input candidate is not selected after the display control unit 15c displays the input candidate data 130 is continued for a predetermined time, the input candidate data 130 from the input screen 100. It is possible to set an arbitrary time for the predetermined time.

The display control unit 15c has a function for displaying the plurality of the key objects 111, which is to be selected by the user U, on the input screen 100. For example, the display control unit 15c displays a QWERTY layout keyboard, a flick-input layout keyboard, a Godan keyboard, or the like on the input screen 100. The QWERTY layout keyboard is a software keyboard in which keys are arranged by using the QWERTY layout. The flick-input layout keyboard is a software keyboard in which the Japanese columns of the "a" column, the "ka" column, the "sa" column, the "ta" column, the "na" column, the "ha" column, the "ma" column, the "ya" column, the "ra" column, and the "wa" column are allocated to the associated keys. The Godan keyboard is a software keyboard in which vowel sound keys are arranged on the left side and consonant sound keys are arranged on the right side. The display control unit 15c allows the display unit 11 to display the input screen 100 having the keyboard that is set by the user U or the like.

The display control unit 15c has a function for displaying the input field 120 at the display position, which is different from the positions of the plurality of the key object 111, of the input screen 100. The display control unit 15c has a function for displaying the input candidate selected by the user U on the input field 120 on the input screen 100. For example, the display control unit 15c displays the input candidate selected by the user U, the character string for which an input has been defined, or the like into the input field 120.

In the above, an example of the functional configuration of the HMD 10 according to the embodiment has been described. Furthermore, the configuration described above with reference to FIG. 3 is only an example and the functional configuration of the HMD 10 according to the embodiment is not limited to the example described above. The functional configuration of the HMD 10 according to the embodiment may be flexibly modified in accordance with specifications or operation.

In the embodiment, a description will be given of a case in which the HMD 10 is separated from the operation input unit 50; however, the embodiment is not limited to this. For example, the HMD 10 may also include the operation input unit 50. For example, the HMD 10 may also be integrated with the operation input unit 50 as a single unit.

[Processing procedure of head-mounted display 10 according to first embodiment]

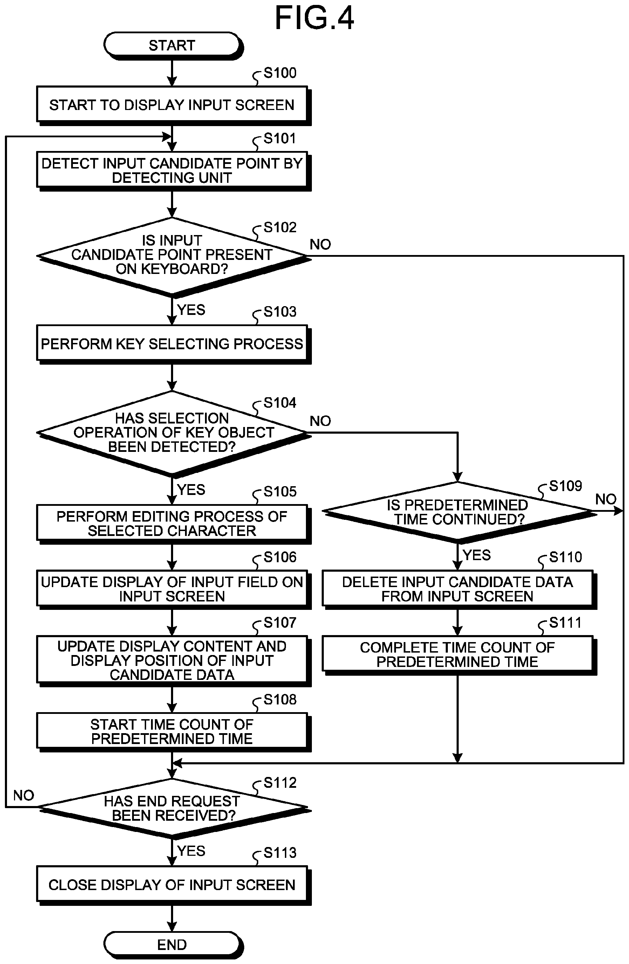

In the following, an example of a processing procedure of the head-mounted display 10 according to the first embodiment will be described. FIG. 4 is a flowchart illustrating an example of a processing procedure performed by the head-mounted display 10 according to the first embodiment. The processing procedure illustrated in FIG. 4 is implemented by the control unit 15 included in the HMD 10 executing a program. The processing procedure illustrated in FIG. 4 is repeatedly performed by the control unit 15 in the HMD 10.

As illustrated in FIG. 4, the control unit 15 in the HMD 10 starts display of the input screen 100 (Step S100). For example, the control unit 15 requests the display unit 11 to display the input screen 100. Consequently, the display unit 11 starts display of the input screen 100, so that the user U visually recognizes the input screen 100 that includes the keyboard 110 and the input field 120. When the control unit 15 starts display of the input screen 100, the control unit 15 proceeds the process to Step S101.

The control unit 15 detects the input candidate point P by using the detecting unit 12 (Step S101). The control unit 15 judges whether the input candidate point P is present on the keyboard 110 on the input screen 100 (Step S102). For example, if the coordinates of the input candidate point P is within the display area in which the keyboard 110 on the input screen 100 is displayed, the HMD 10 judges that the input candidate point P is present on the keyboard 110. Then, if the control unit 15 judges that the input candidate point P is not present on the keyboard 110 (No at Step S102), and the control unit 15 proceeds the process to Step S112 that will be described later. Furthermore, if the control unit 15 judges that the input candidate point P is present on the keyboard 110 (Yes at Step S102), the control unit 15 proceeds the process to Step S103.

The control unit 15 performs a key selection process (Step S103). For example, by performing the key selection process, the HMD 10 detects, by using the detecting unit 12, the input candidate point P and selects the key object 111 indicated by the input candidate point P. In the embodiment, the control unit 15 changes the display mode of the selected key object 111 to the display mode that is different from the display mode of the other key object 111, and then, displays the key object 111 on the input screen 100. The control unit 15 functions as the selecting unit 15a by performing the process at Step S103. Then, when the control unit 15 selects the key object 111, the control unit 15 proceeds the process to Step S104.

The control unit 15 judges whether a selection operation of the key object 111 has been detected (Step S104). For example, if the control unit 15 receives information that is associated with the selection operation is received from the operation input unit 50 via the communication unit 13, the control unit 15 judges that the selection operation of the key object 111 has been detected. If the control unit 15 judges that the selection operation of the key object 111 has been detected (Yes at Step S104), the control unit 15 proceeds the process to Step S105.

The control unit 15 performs an editing process on the selected character (Step S105). For example, by performing the editing process, the control unit 15 defines the character of the key object 111 indicated by the input candidate point P as an input candidate. If the input candidate data 130 is not present, the control unit 15 newly generates the input candidate data 130 indicating the input candidate and stores the generated input candidate data 130 in the storage unit 14. If the input candidate data 130 is present, the control unit 15 adds the input candidate obtained this time to the input candidate data 130. Then, when the control unit 15 completes the editing process, the control unit 15 proceeds the process to Step S106.

The control unit 15 updates the display of the input field 120 on the input screen 100 (Step S106). For example, the control unit 15 updates the display content in the input field 120 based on the edited input candidate data 130. Then, the control unit 15 updates the display content and the display position of the input candidate data 130 (Step S107). For example, the control unit 15 decides the display mode of the input candidate data 130 based on the number of pieces of the data of the input candidate point P and the upper limit. In detail, if the number of pieces of data is less than the upper limit, the control unit 15 determines a first display mode in which all of the input candidates are displayed. Furthermore, if the number of pieces of data is greater than or equal to the upper limit, the control unit 15 decides to use a second display mode in which only the input candidates that are positioned at the last part by an amount corresponding to the upper limit from among the plurality of input candidates are displayed. Then, the control unit 15 specifies the display position of the input candidate data 130 on the input screen 100 based on the input candidate point P, and then, requests the display unit 11 to update the input candidate data 130 that is being displayed on the input screen 100. Consequently, the display unit 11 updates the display of the input candidate data 130 in the input field 120 and the keyboard 110 on the input screen 100.

The control unit 15 starts to count the time of a predetermined time (Step S108). For example, the control unit 15 starts up a timer that indicates time-out when a predetermined time has elapsed. For example, the control unit 15 detects the time at which a count of the time is started, and then, stores the detected time in the storage unit 14. Then, if the control unit 15 ends the process at Step S108, the control unit 15 proceeds the process to Step S112 that will be described later.

Furthermore, if the HMD 10 judges that the selection operation of the key object 111 is not detected (No at Step S104), the control unit 15 proceeds the process to Step S109. The control unit 15 judges whether a state in which the selection operation is not detected is continued for a predetermined time (Step S109). For example, if the timer indicates time-out, the control unit 15 judges that the state is continued for a predetermined time. For example, the control unit 15 calculates the period of time after the count of the time is started and judges, if the time reaches the predetermined time, that the state is continued for the predetermined time. Then, if the control unit 15 judges that the state is not continued for the predetermined time (No at Step S109), the control unit 15 proceeds the process to Step S112 that will be described later. Furthermore, if the control unit 15 judges that the state is continued for the predetermined time (Yes at Step S109), the control unit 15 proceeds the process to Step S110.

The control unit 15 deletes the input candidate data 130 from the input screen 100 (Step S110). For example, the control unit 15 requests the display unit 11 to delete the input candidate data 130. Consequently, the display unit 11 deletes the input candidate data 130 from the input screen 100. Then, the control unit 15 ends the count of the time of the predetermined time (Step S111). If the control unit 15 ends the process at Step S111, the control unit 15 proceeds the process to Step S112.

The control unit 15 judges whether an end request is received (Step S112). For example, if the control unit 15 receives an end of the use of an input operation, an end operation performed by the user U, or the like, the control unit 15 judges that the end request is received. Then, if the control unit 15 judges that the end request is not received (No at Step S112), the control unit 15 returns to the process at Step S101 and repeats the series of processes at Step S101 and the subsequent processes. Furthermore, if the control unit 15 judges that the end request is received (Yes at Step S112), the control unit 15 proceeds the process to Step S113.

The control unit 15 ends the display of the input screen 100 (Step S113). For example, the control unit 15 requests the display unit 11 to delete the input screen 100. Consequently, the display unit 11 ends the display of the input screen 100. Then, if the control unit 15 ends the process at Step S113, the control unit 15 ends the processing procedure illustrated in FIG. 4.

In the processing procedure illustrated in FIG. 4, a description has been given of a case in which the control unit 15 functions as the display control unit 15c by performing the processes at Step S100, Step S106, Step S107, Step S110, and Step S113; however, the embodiment is not limited to this.

The first embodiment described above is an example and various modifications and applications are possible.

[First modification of first embodiment]

For example, the HMD 10 according to the first embodiment is able to change the display mode of the input screen 100.

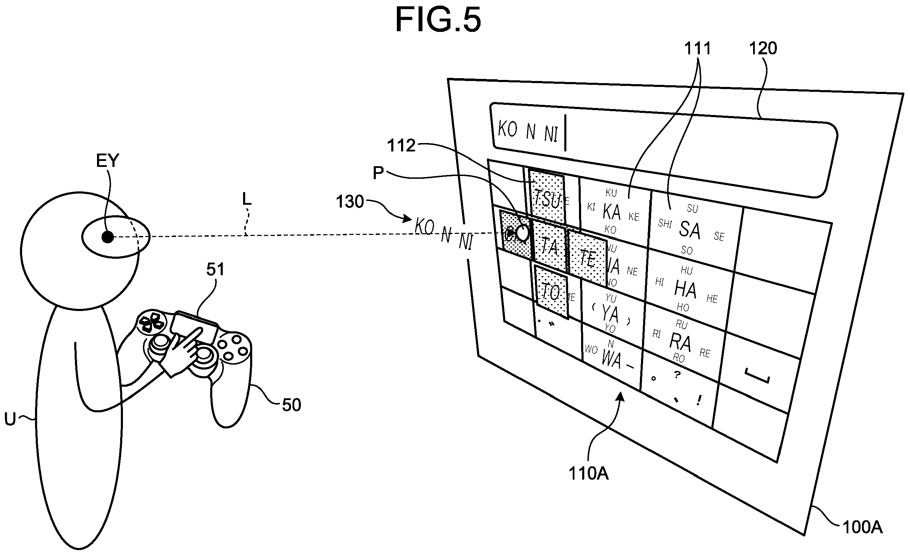

FIG. 5 is a diagram illustrating an example of an information processing method according to a first modification of the first embodiment. As illustrated in FIG. 5, the HMD 10 may also input a character or a character string by using an input screen 100A and the operation input unit 50. In this case, the operation input unit 50 includes a touch pad 51 and allows the user U to perform a selection operation using a gesture. Then, the operation input unit 50 detects a gesture, such as tapping or flicking, via the touch pad 51 and outputs the detection result to the HMD 10.

The HMD 10 has a function for stereoscopically displaying the input screen 100A in a virtual space. The HMD 10 has an input function for inputting a character, a symbol, or the like in combination with a movement of the line of sight of the user U on the input screen 100A and an operation of the operation input unit 50. The input screen 100A includes a keyboard 110A with the key layout for a flick input and also includes the input field 120. The keyboard 110A includes a plurality of the key objects 111. Characters of the Japanese columns of the "a" column, the "ka" column, the "sa" column, the "ta" column, the "na" column, the "ha" column, the "ma" column, the "ya" column, the "ra" column, and the "wa" column are allocated to the associated key objects 111. For example, the characters of "a", "i", "u", "e", and "o" are allocated to the key object 111 of the Japanese "a" column.

In the example illustrated in FIG. 5, in a case in which the user U inputs a character string of Japanese "ko n ni chi ha", the user U completes an input up to "ko n ni" and attempts to selects a character of "chi" in the "ta" column by moving the line of sight L. In this case, if the HMD 10 detects that the key object 111 of the "ta" column on the input screen 100A is indicated, the HMD 10 superimposes five key objects 112, which indicates the characters of "ta", "chi", "tsu", "te", and "to", on the "ta" column, on the key object 111. Then, the HMD 10 superimposes the input candidate data 130 indicating "ko n ni" on the key objects 112 by using the input candidate point P as a reference.

The user U moves the line of sight L to the left direction while referring to the input candidate data 130 and performs the selection operation on the touch pad 51 included in the operation input unit 50 in a state in which the user U visually recognizes the key object 112 of "chi". In this case, if the HMD 10 detects, in a state of detecting that the input candidate point P indicates the key object 112 of "chi", the selection operation of the key object 112 of "chi" via the operation input unit 50, the HMD 10 receives the character of "chi" as an input candidate. Then, the HMD 10 allows the input candidate data 130 of the selected "ko n ni chi" to follow the input candidate point P on the input screen 100A. The HMD 10 displays the input candidate indicated by the input candidate data 130 on the input field 120 on the input screen 100A.

As described above, the HMD 10 according to the first modification of the first embodiment displays the input candidate data 130 selected based on the input candidate point P on the input screen 100A and the gesture performed by the user U on the input screen 100A by using the input candidate point P as a reference. More specifically, the HMD 10 displays the input candidate data 130 in the vicinity of the input candidate point P on the input screen 100A and allows the user U to be easily aware of an erroneous input. By allowing the user U to simply refer to the input candidate data 130, the HMD 10 is able to reduce an amount of movement of the line of sight L of the user U when compared with a case of moving the line of sight to the input field 120. Consequently, by reducing the amount of the line of sight L of the user U to the input candidate data 130, the HMD 10 is able to allow the user U to check the input result by reducing a physical load applied to the user U.

[Second modification of first embodiment]

For example, the HMD 10 according to the first embodiment is able to change a display mode of the input candidate data 130.

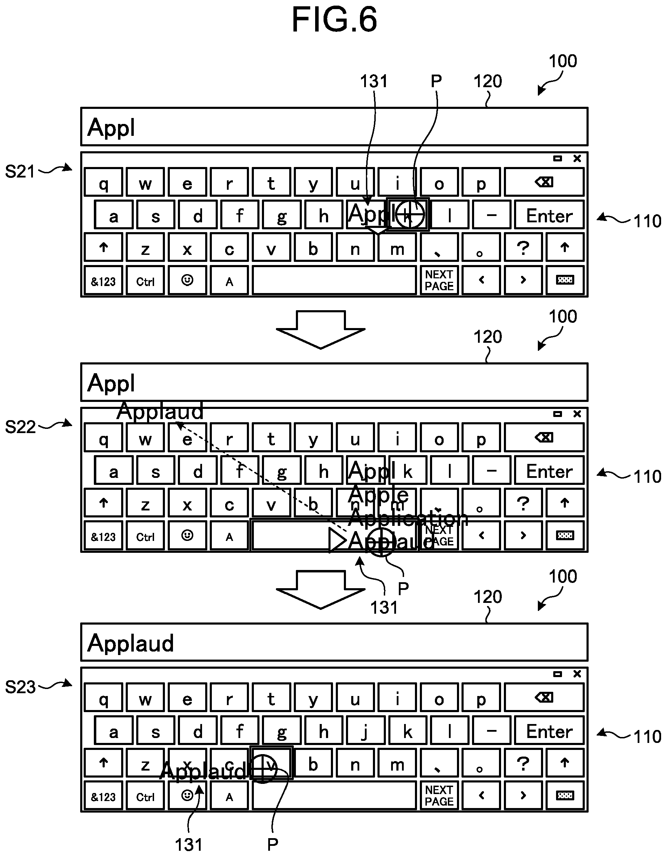

FIG. 6 is a diagram illustrating an example of an information processing method according to a second modification of the first embodiment. As illustrated in FIG. 6, the HMD 10 displays the keyboard 110 and the input field 120 on the input screen 100. The control unit 15 in the HMD 10 has a function for superimposing an input candidate character string of the input candidate data 130 on the key object 111 in a selectable manner for the user U. If the control unit 15 displays one or a plurality of input candidate character strings, the control unit 15 regards the selected input candidate character string as the input candidate data 130.

At Step S21 illustrated in FIG. 6, if the user U inputs the character string of "Applaud", the user U completes an input of characters up to "Appl" and the line of sight L indicates in the vicinity of the key object 111 of "k". In this case, the HMD 10 searches a conversion database for a predictive input candidate including "Appl" of the input candidate data 130. The conversion database is stored in, for example, the storage unit 14 in the HMD 10, a storage device in the information processing server, or the like. The HMD 10 has extracted three predictive input candidates of "Apple", "Application", and "Applaud". Namely, the HMD 10 also displays input candidate data 131 in the vicinity of the input candidate point P and follows the input candidate data 131 to the input candidate point P. In the embodiment, the HMD 10 displays the input candidate data 131 in which an underline and a down arrow are added to "Appl", the HMD 10 allows the user U to recognize that the predictive input candidate is present. Then, the user U operates a reference operation with respect to the down arrow by using the operation input unit 50. The reference operation is different from, for example, the selection operation.

At Step S22, the HMD 10 detects the reference operation of the user U, so that the HMD 10 performs superimposed display of the input candidate data 131 below the input candidate of "Appl". The HMD 10 displays "Apple", "Application", and "Applaud" that indicate the input candidate data 131 by arranging the data in the vertical direction. Furthermore, each of "Apple", "Application", and "Applaud" indicating the input candidate data 131 may correspond to the predictive input candidate information according to the present disclosure. In the embodiment, the HMD 10 displays all of the plurality of predictive input candidates so as to be located on the keyboard 110; however, it may also be possible to display the predictive input candidate such that a part of the predictive input candidate sticks out from the keyboard 110. Then, the user U moves the line of sight L to "Applaud" of the input candidate data 131. In this case, if the HMD 10 performs a fixed display of the input candidate data 131, the HMD 10 fixes the display position without allowing the input candidate data 131 to follow the input candidate point P even if the input candidate point P moves. Consequently, the user U is able to move the input candidate point P to the predictive input candidate in accordance with a movement of the line of sight L.

At Step S22, the user U performs a selection operation by using the operation input unit 50 in a state in which the input candidate point P is located at the predictive input candidate of "Applaud". In this case, if the HMD 10 detects the selection operation in the state in which the input candidate point P indicates the predictive input candidate of "Applaud" via the operation input unit 50, the HMD 10 defines "Applaud" as the input candidate data 131. In the embodiment, the HMD 10 displays an animation that moves the input candidate (character string) of "Applaud" from the input candidate data 131 toward the input field 120.

At Step S23, the HMD 10 displays the input candidate of "Applaud" indicated by the input candidate data 131 into the input field 120. The HMD 10 allows the input candidate data 131 of "Applaud" to follow the input candidate point P. Consequently, the user U refers to the input candidate data 131 in the vicinity of the input candidate point P, so that the user U is able to continue the input operation by using the line of sight L while checking the input candidate that is located immediately before the selecting input candidate without moving the line of sight L to the input field 120.

For example, at Step S22, it is assumed that the user U does not perform the selection operation of the input candidate by using the operation input unit 50. In this case, if the state in which a next input candidate is not selected after the input candidate data 131 is displayed is continued for a predetermined time, the HMD 10 deletes the input candidate data 131 from the input screen 100. The predetermined time may be, for example, a period of time that is in accordance with the number of predictive input candidates to be displayed. In the embodiment, if the predetermined time is, for example, two seconds based on the input average time of the user U, the time obtained by multiplying the input average time by the number of predictive input candidates is used. Then, if an unselected state is continued for a predetermined time, the HMD 10 causes the input candidate data 131 to fade out from the input screen 100. Furthermore, the HMD 10 changes the predetermined time in accordance with the number of predictive input candidates, so that the HMD 10 is able to avoid the input candidate data 131 from being deleted during a check performed by the user U.

Furthermore, in the embodiment, a description will be given of a case in which, after the predictive input candidate is selected by the user U, the HMD 10 allows the predictive input candidate, as the input candidate data 131, to follow the input candidate point P; however, the embodiment is not limited to this. For example, if the predictive input candidate is selected by the user U, the HMD 10 may also decide an input of the input candidate and end a follow-up display of the input candidate data 131.

In the embodiment, the HMD 10 may also allow the user U to select the predictive input candidate by an operation of the operation input unit 50. For example, if the operation input unit 50 is a controller of a game machine, the HMD 10 may also allow the user U to focus the predictive input candidate using arrow-key buttons, i.e. up-, down-, right-, and left-key buttons, and select the predictive input candidate using a decision button, or may also allow the user U to focus the predictive input candidate using a stick button and select the predictive input candidate using the stick button.

As described above, the HMD 10 according to the second modification of the first embodiment superimposes the predictive input candidate that includes the input candidate of the input candidate data 131 on the key object 111 in a selectable manner for the user U, and decides the selected predictive input candidate as the input candidate data 131. Accordingly, the HMD 10 displays the predictive input candidate in the vicinity of the input candidate point P and is able to allow the user U to select the predictive input candidate. Consequently, the HMD 10 is able to reduce an amount of movement of the line of sight L of the user U, so that the HMD 10 is able to improve input efficiency using the line of sight L.

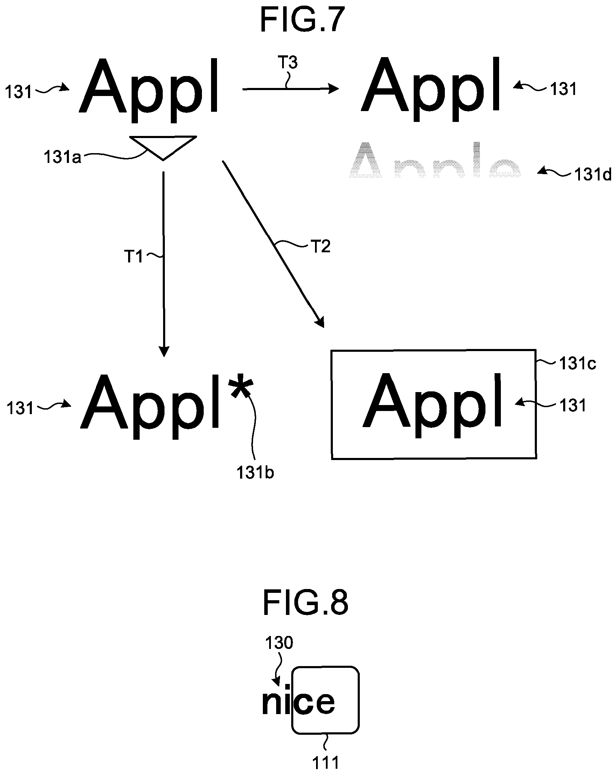

FIG. 7 is a diagram illustrating an example of a display mode of the input candidate data 131 according to the second modification of the first embodiment. In the example of a transformation T1 illustrated in FIG. 7, the HMD 10 is able to transform a down arrow 131a located at the input candidate data 131 to a symbol 131b. The symbol 131b is illustrated by "*"; however, the embodiment is not limited to this and may also be, for example, "+", "~", or the like. In the example of a transformation T2, the HMD 10 is able to change the down arrow 131a located at the input candidate data 131 to a frame 131c. The frame 131c is a frame that encloses the input candidate of "Appl" indicated by the input candidate data 131. In the example of the transformation T3, the HMD 10 is able to change the down arrow 131a located at the input candidate data 131 to abbreviation data 131d that indicates a part of the predictive input candidate. The abbreviation data 131d indicates an upper half of "Apple", which is one of the predictive input candidates, at the time of displaying below the input candidate and is the data in which a lower half of "Apple" is abbreviated. If the abbreviation data 131d displays above the input candidate, the data may also indicate the lower half of "Apple" that is one of the predictive input candidates and may also abbreviate the upper half of "Apple".

Furthermore, the second modification of the first embodiment may also be used in combination with other embodiments, the input candidate data 130, 131, or the like described in the modification.

[Third modification of first embodiment]

For example, the HMD 10 according to the first embodiment is able to change the layout of the input candidate data 130.

FIG. 8 to FIG. 14 are diagrams each illustrating a display example of the input candidate data 130 according to a third modification of the first embodiment. In the third modification according to the first embodiment, the HMD 10 associates the input candidate data 130 with the key object 111 that is indicated by the input candidate point P and performs superimposed display of the input candidate data 130.

In the example illustrated in FIG. 8, the HMD 10 detects that, in the state in which the keyboard 110 of an alphabet indicated by a lowercase character is displayed on the input screen 100, the input candidate point P indicates the key object 111 of "e". In this case, the HMD 10 performs the superimposed display in which the input candidate data 130 that indicates "nic" is associated with the key object 111 of "e". The HMD 10 displays the input candidate data 130 on the left side of the key object 111 such that "nic" indicated by the input candidate data 130 and the character of "e" of the key object 111 are visually recognized as a single consecutive character string. Accordingly, the HMD 10 allows the user U to visually recognize the character string of "nice" on the keyboard 110 by the characters of the input candidate data 130 and the key object 111.

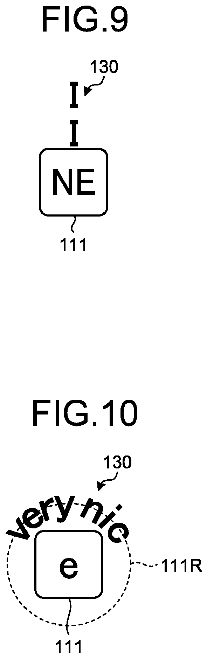

In the example illustrated in FIG. 9, the HMD 10 detects that, in the state in which the keyboard 110 of Japanese hiragana is displayed on the input screen 100, the input candidate point P indicates the key object 111 of "ne". Unlike FIG. 2, if an input language is a vertical writing language, such as Japanese or Chinese language, the input candidate data 130 may also be arranged above the input candidate point P. In this case, the HMD 10 performs the superimposed display in which the input candidate data 130 that indicates "i i" is associated with the key object 111 of "ne". The HMD 10 displays the input candidate data 130 so as to extend upward from the key object 111 such that the characters of "i i" indicated by the input candidate data 130 and the character "ne" indicated by the key object 111 are a single consecutive character string. Accordingly, the HMD 10 is able to allow the user U to recognize, on the keyboard 110, the character string of "i i ne" by the character indicated by the input candidate data 130 and the character indicated by the key object 111.

In the example illustrated in FIG. 10, the HMD 10 detects that, in the state in which the keyboard 110 of alphabets indicated by lowercase characters are displayed on the input screen 100, the input candidate point P indicates the key object 111 of "e". In this case, the HMD 10 performs the superimposed display in which the input candidate data 130 that indicates "very nic" is associated with the key object 111 of "e". The HMD 10 displays the input candidate data 130 on a curved trajectory 111R of the key object 111 such that "very nic" indicated by the input candidate data 130 is located around the character of "e" indicated by the key object 111. The curved trajectory 111R encloses, for example, the key object 111 and is within the word identification limit. More specifically, the HMD 10 arrays the input candidate data 130 clockwise in the order in which the pieces of input candidate data 130 are selected in the circumferential direction around the key object 111 that is associated with the current position of the input candidate point P. Accordingly, the HMD 10 is able to allow the user U to check the plurality of input candidates that are selected until now by simply and visually recognize the characters of the key object 111. In the example illustrated in FIG. 10, the HMD 10 displays the two words of "very" and "nic" around the key object 111.

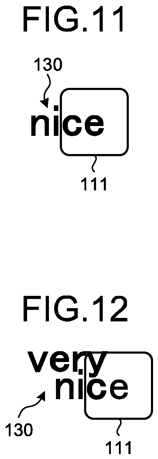

In the example illustrated in FIG. 11, the HMD 10 detects that, in the state in which the display illustrated in FIG. 8 described above is performed, the key object 111 of "e" indicated by the input candidate point P has been selected by the user U. In this case, the HMD 10 displays the input candidate data 130 of "e" that is the last character so as to be superimposed on the character of the key object 111. Accordingly, the HMD 10 is able to allow the user U to recognize, without referring to the input field 120, that the key object 111 of "e" has been selected and the input candidate data 130 becomes the input candidate of "nice".

In the example illustrated in FIG. 12, the HMD 10 detects that, in the state in which the keyboard 110 of an alphabet indicated by a lowercase character is displayed on the input screen 100, the input candidate point P indicates the key object 111 of "e". In this case, the HMD 10 performs the superimposed display in which the input candidate data 130 that indicates "very" and "nic", which are displayed on separate new lines, are associated with the key object 111 of "e". The HMD 10 displays both of the input candidate data 130 and the key object 111 on the left side of the character "e" of the key object 111 so as to be positioned within the word identification limit. Accordingly, the HMD 10 is able to allow the user U to check the input candidates that are selected until now by simply and visually recognizing the character of the key object 111.

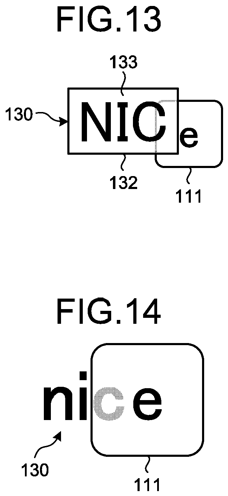

In the example illustrated in FIG. 13, the HMD 10 performs, as described above with reference to FIG. 8, the superimposed display in which the input candidate data 130 that indicates "nic" is associated with the key object 111 of "e". The HMD 10 displays the input candidate data 130 on the left side of the key object 111 such that "nic" indicated by the input candidate data 130 and the character of "e" indicated by the key object 111 are a single consecutive character string. Then, the HMD 10 increases the font size of the input candidate data 130 so as to be greater than the character size of the key object 111. The HMD 10 encloses the input candidate of the input candidate data 130 by a frame 132 and fills a background 133 of the input candidate. Accordingly, the HMD 10 is able to guarantee the visibility of the virtual object that is present around the input candidate point P when the input candidate data 130 is displayed so as to be superimposed on the key object 111.

In the example illustrated in FIG. 14, the HMD 10 performs, as described above with reference to FIG. 8, the superimposed display in which the input candidate data 130 that indicates "nic" is associated with the key object 111 of "e". The HMD 10 displays the input candidate data 130 on the left side of the key object 111 such that "nic" indicated by the input candidate data 130 and the character of "e" indicated by the key object 111 are a single consecutive character string. Here, in order to enhance the visibility of the key object 111 of "e", the HMD 10 sets the visibility of "c" indicated by the input candidate data 130 to be lower than the visibility of "ni" indicated by the input candidate data 130. More specifically, the HMD 10 arranges the portion of the input candidate data 130 that is superimposed on the key object 111 (in this example, "c") on the distal side (back side) of the key object 111 viewed from the user U and displays the key object 111 in a translucent manner. Namely, the HMD 10 superimposes the key object 111 on the input candidate data 130 while maintaining the state in which "c" indicated by the input candidate data 130 is visually recognized. In this state, the HMD 10 is able to display the input candidate data 130 in a display mode in accordance with a preference of the user U. Accordingly, it is possible to prevent a decrease in visibility of the key object 111 associated with the input candidate point P.

Furthermore, the HMD 10 according to the first embodiment described above may also dynamically change a character color of the input candidate data 130. For example, the HMD 10 may also change the character color of the input candidate data 130, by considering accessibility or the like, so as not to become assimilated with the background color. For example, the HMD 10 may also change the character color of the input candidate data 130 in accordance with an environment condition, such as outside light.

As described above, the HMD 10 according to the third modification of the first embodiment performs the superimposed display on the input candidate data 130 by associating the input candidate data 130 with the key object 111 indicated by the input candidate point P. Consequently, the HMD 10 is able to provide various display modes to the user U. Consequently, the HMD 10 improve an input efficiency using the line of sight L and improve the convenience of the user U.

Furthermore, the third modification of the first embodiment may also be used in combination with other embodiments, the input candidate data 130, 131, or the like described in the modification.

In the first embodiment described above, a description has been given of a case in which the HMD 10 displays the keyboard 110 on the input screen 100; however, the embodiment is not limited to this. For example, the HMD 10 may also allow the user U to visually recognize a physical keyboard and superimpose the input candidate data 130 on the physical keyboard.

(Second Embodiment)

[Outline of information processing apparatus according to second embodiment]

In the following, a second embodiment will be described. Similarly to the first embodiment, the information processing apparatus according to the second embodiment is the head-mounted display (HMD) 10. The HMD 10 includes the display unit 11, the detecting unit 12, the communication unit 13, the storage unit 14, and the control unit 15. Furthermore, descriptions of the same configuration as that of the HMD 10 according to the first embodiment will be omitted. Furthermore, it may be assumed that the input field 120 according to the embodiment displays both of the input candidate data 130, which has been selected and decided, and the input candidate data 130, which has been selected but not decided.

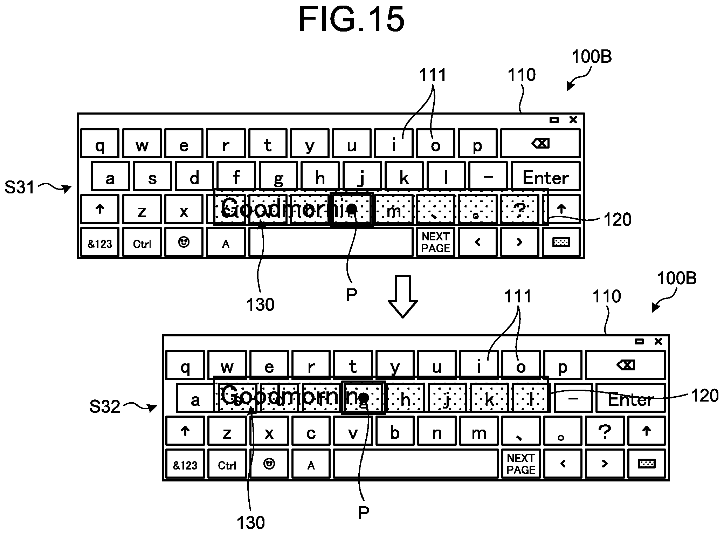

FIG. 15 is a diagram illustrating an example of an information processing method according to the second embodiment. As illustrated in FIG. 15, the HMD 10 has a function for stereoscopically displaying an input screen 100B in a virtual space. The HMD 10 has an input function for inputting a character, a symbol, or the like in combination with a movement of the line of sight of the user U on the input screen 100B and an operation of the operation input unit 50. For example, the HMD 10 displays the input screen 100B in a discrimination field of view of the user U. For example, the HMD 10 displays the input screen 100B in front of the user U and detects the input candidate point P on the input screen 100B based on the line of sight information related to the user U.

In the example illustrated in FIG. 15, the input screen 100B includes the keyboard 110 and the input field 120. The keyboard 110 includes a plurality of the key objects 111. In the embodiment, a description will be given of a case in which the keyboard 110 is a QWERTY layout keyboard; however, the keyboard 110 is not limited to this. The keyboard 110 is moved and displayed in accordance with a movement of the line of sight L of the user U. The input field 120 is displayed at a predetermined position in the virtual space. Namely, the HMD 10 displays, on the input screen 100B, the keyboard 110, in which the back of the input field 120 is movable, in the state in which the display position of the input field 120 is fixed. In the embodiment, the HMD 10 moves the keyboard 110 behind the input field 120 in accordance with the line of sight L of the user U. In other words, the HMD 10 vertically and horizontally scrolls the keyboard 110 by using the input field 120 as a reference. Furthermore, the HMD 10 may also display the input field 120 so as to stick out from the keyboard 110 to an external part or may also display the input field 120 so as not to stick out from the keyboard 110 to an external part. Then, the HMD 10 displays the input candidate data 130 onto the input field 120.

At Step S31 illustrated in FIG. 15, when the user U inputs a character string of "Goodmorning", an input up to "Goodmorni" has been completed. In this case, the HMD 10 displays the input candidate data 130 indicating "Goodmorni" so as to be superimposed on the input field 120 on the keyboard 110. Then, the user U moves the line of sight L to the vicinity of the key object 111 of "n". In this case, when the HMD 10 detects that the input candidate point P is located in the vicinity of the key object 111 of "n", the HMD 10 changes the display position of the keyboard 110 such that the key object 111 of "n" indicated by the input candidate point P is located in the input field 120. Namely, the HMD 10 changes a relative positional relationship between the key object 111 and the input field 120 such that the key object 111 of "n" indicated by the input candidate point P is located in the input field 120. More specifically, the HMD 10 brings the key object 111 close to the input field 120 and displays the key object 111 so as to be placed in the input field 120. In the embodiment, the HMD 10 locates the input candidate point P into the input field 120 by scrolling the keyboard 110. Then, the HMD 10 scrolls the keyboard 110 such that character of "n" indicated by the key object 111 is visually recognized as the last character of the input candidate data 130. Consequently, the HMD 10 is able to allow the user U to visually recognize "Goodmorni" in the input field 120 and "n" indicated by the key object 111 as a single consecutive character string.

At Step S32, the HMD 10 displays the input candidate data 130 that indicates "Goodmornin" so as to be superimposed on the input field 120 on the keyboard 110. Then, the user U moves the line of sight L to the vicinity of the key object 111 of "g". In this case, when the HMD 10 detects that the input candidate point P is located in the vicinity of the key object 111 of "g", the HMD 10 changes the display position of the keyboard 110 such that the key object 111 of "g" indicated by the input candidate point P is located in the input field 120. In the embodiment, the HMD 10 scrolls the keyboard 110 such that the character of "g" indicated by the key object 111 is visually recognized as the last character of the input candidate data 130. Consequently, the HMD 10 is able to allow the user U to visually recognize "Goodmorni" in the input field 120 and "n" indicated by the key object 111 as a single consecutive character string.

Furthermore, in the embodiment, a description will be given of a case in which the HMD 10 displays the input field 120 in a fixed manner; however, the embodiment is not limited to this. For example, the HMD 10 may also relatively move the keyboard 110 and the input field 120 based on an amount of movement of the line of sight L of the user U, a visual recognition position, or the like.

As described above, the HMD 10 according to the second embodiment superimposes the input field 120 on the plurality of the key objects 111, and changes the display position of the plurality of the key objects 111 such that the key object 111 indicated by the input candidate point P is located in the input field 120. Consequently, the HMD 10 is able to reduce an amount of movement of the line of sight L of the user U to be moved to the input field 120. Consequently, the HMD 10 reduces the amount of movement of the line of sight L of the user U to the input candidate data 130, so that the HMD 10 is able to allow the user U to check the input result by reducing the physical load applied to the user U.

Furthermore, the HMD 10 changes the display position of the plurality of the key objects 111 such that the key object 111 selected by the input candidate point P is located at the input field 120 without changing the display position of the input field 120. Accordingly, the HMD 10 fixes the display position of the input field 120 and moves the key object 111, so that the HMD 10 is able to improve the input operation using the line of sight L. Consequently, the HMD 10 is able to implement a novel input by reducing the physical load applied to the user U.

Furthermore, the second embodiment may also be used in combination with other embodiments, the input candidate data 130, 131, or the like described in the modification.

(Third Embodiment)

[Outline of information processing apparatus according to third embodiment]

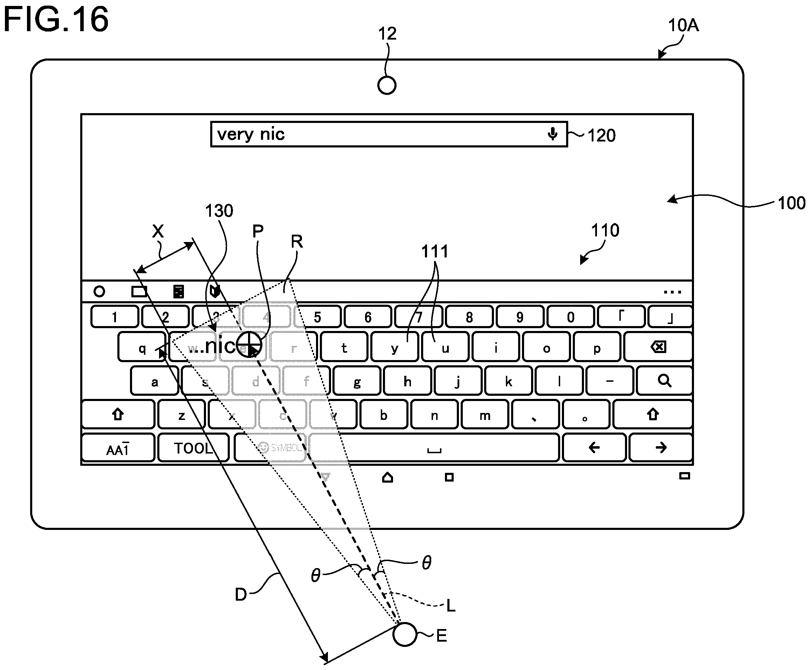

In the following, the second embodiment will be described. FIG. 16 is a diagram illustrating an example of an information processing method according to a third embodiment. As illustrated in IG. 16, information processing apparatus according to the second embodiment is a tablet terminal 10A. The tablet terminal 10A includes the display unit 11, the detecting unit 12, the communication unit 13, the storage unit 14, and the control unit 15. Furthermore, descriptions of the same configuration as that of the HMD 10 according to the first embodiment will be omitted.

The tablet terminal 10A has a function for displaying the input screen 100 on the display unit 11. The tablet terminal 10A has an input function for inputting a character, a symbol, or the like in combination with a movement of the line of sight L of the user U on the input screen 100 and an operation of the operation input unit 50. For example, the tablet terminal 10A displays the input screen 100 in front of the user U and detects the input candidate point P on the input screen 100 by the detecting unit 12 based on the line of sight information of the user U.

In the example illustrated in FIG. 16, the input screen 100 includes the keyboard 110 and the input field 120. The keyboard 110 includes the plurality of the key objects 111. The input field 120 is displayed in a display area that is different from the display area of the keyboard 110 on the input screen 100. The input field 120 is displayed on an upper part of the input screen 100 away from the keyboard 110.

The tablet terminal 10A has a function for displaying the input screen 100 on the display unit 11. The tablet terminal 10A has an input function for inputting a character, a symbol, or the like in combination with a movement of the line of sight of the user U on the input screen 100 and an operation of the operation input unit 50. The tablet terminal 10A detects the input candidate point P on the input screen 100 by the detecting unit 12 based on the line of sight information related to the user U who visually recognizes the tablet terminal 10A. The detecting unit 12 detects the distance from the input screen 100 to a viewpoint position E of the user U. In the embodiment, the detecting unit 12 detects a distance D in a range R of a viewing angle in which a human is able to recognize a character from the viewpoint position E. The range R is an area obtained by connecting the viewpoint position E and a pair of points, on the input screen 100, each of which is the intersection of the line of sight L and a straight line passing through a viewing angle $\theta$ in which the character can be recognized from the line of sight L. Furthermore, the range R of the viewing angle in which a human is able to recognize a character is an example of the vicinity of the input candidate point P according to the present disclosure.

The display control unit 15c in the tablet terminal 10A has a function for allowing the input candidate data 130 to follow the input candidate point P. The display control unit 15c has a function for controlling the number of pieces of data of the input candidate data 130 to which a follow-up display is applied. The display control unit 15c has a function for abbreviating, if the number of pieces of data of the input candidate data 130 reaches the upper limit, a part of the input candidate data 130 that is displayed so as to be allowed to follow the input candidate point P. The display control unit 15c has a function for changing the number of pieces of data of the input candidate data 130 based on the distance D from the input screen 100 to the viewpoint position E detected by the detecting unit 12. For example, the display control unit 15c calculates a length X on the input screen 100 associated with the input candidate point P based on the distance D from the input screen 100 to the viewpoint position E and based on the viewing angle $\theta$, and then, changes the number of pieces of data of the input candidate data 130 based on the length X. Specifically, the display control unit 15c calculates the length X on the input screen 100 by using a calculation expression (1).

$$X=D*\tan\theta \hspace{4cm} (1)$$

If, for example, the distance between the viewpoint position E and the input screen 100 is 60 cm and the viewing angle θ is 5 degrees, the display control unit 15c calculates the length X on the input screen 100 is about 5.2 cm. In this case, the display control unit 15c decides the number of pieces of data of the input candidate data 130 so as to be within the length X. In the example illustrated in FIG. 16, the display control unit 15c decides the number of pieces of data is three characters and allows the input candidate data 130 that indicates "...nic" to follow the input candidate point P based on the last three characters included in the input candidate of "very nic". Furthermore, a method for deciding the number of pieces of data of the input candidate data 130 may also be used in the first and the second data embodiment described above.

The tablet terminal 10A may also change the number of pieces of data of the input candidate data 130 to be superimposed on the keyboard 110 in accordance with a case in which the viewpoint position E of the user U who visually recognizes the input screen 100 is far from or close to the keyboard 110. Furthermore, the tablet terminal 10A may also change the font size of the input candidate data 130 to be superimposed based on the distance D from the input screen 100 to the viewpoint position E. Furthermore, the tablet terminal 10A may also change the number of pieces of data, the font size, or the like of the input candidate data 130 in accordance with a change in the distance D by always monitoring the distance D from the input screen 100 to the viewpoint position E.

As described above, based on the distance D from the input screen 100 to the viewpoint position E detected by the detecting unit 12, the tablet terminal 10A according to the third embodiment changes the number of pieces of data of the input candidate data 130 to which the superimposed display is applied. Accordingly, the tablet terminal 10A is able to perform the superimposed display of the input candidate data 130 suitable for the viewpoint position E of the user U. Consequently, the tablet terminal 10A is able to reduce an amount of movement of the line of sight L of the user U to the input candidate data 130 and improve the visibility of the input candidate data 130 that has been subjected to the superimposed display.

Furthermore, another embodiment or a technical idea of the modification may also be used in combination with the third embodiment.

[Hardware configuration]

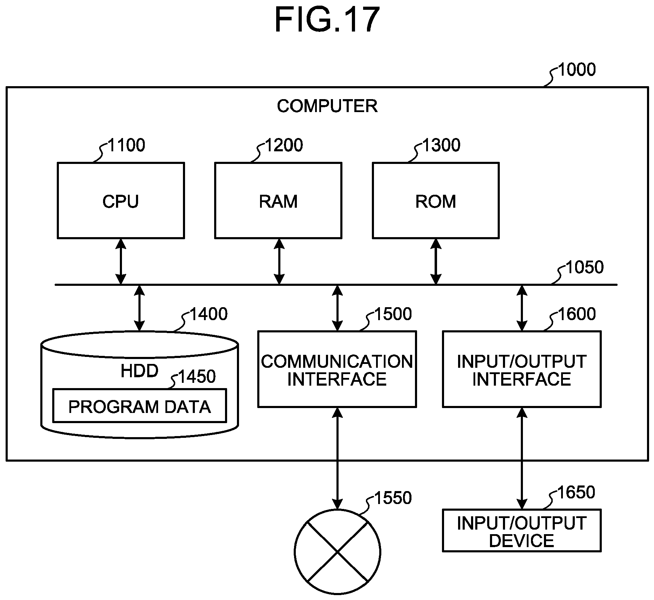

The information processing apparatus according to the embodiments described above is implemented by a computer 1000 having a configuration illustrated in, for example, FIG. 17. In the following, a description will be given by using, as an example, an information processing apparatus according to the embodiments. FIG. 17 is a hardware configuration diagram illustrating an example of the computer 1000 that implements the function of the information processing apparatus. The computer 1000 includes a CPU 1100, a RAM 1200, a read only memory (ROM) 1300, a hard disk drive (HDD) 1400, a communication interface 1500, and an input/output interface 1600. Each of the units included in the computer 1000 is connected by a bus 1050.

The CPU 1100 operates based on the programs stored in the ROM 1300 or the HDD 1400 and controls each of the units. For example, the CPU 1100 loads the programs stored in the ROM 1300 or the HDD 1400 into the RAM 1200 and executes the processes associated with various programs.

The ROM 1300 stores therein a boot program of a Basic Input Output System (BIOS) or the like that is executed by the CPU 1100 at the time of starting up the computer 1000 or a program or the like that depends on the hardware of the computer 1000.

The HDD 1400 is a computer readable recording medium that records therein, in a non-transitory manner, the programs executed by the CPU 1100, data that is used by these programs, and the like. Specifically, the HDD 1400 is a medium that records therein an information processing program according to the present disclosure that is an example of program data 1450.

The communication interface 1500 is an interface for connecting to an external network 1550 (for example, the Internet) by the computer 1000. For example, the CPU 1100 receives data from another device via the communication interface 1500 and sends data generated by the CPU 1100 to the other device.

The input/output interface 1600 is an interface for connecting an input/output device 1650 and the computer 1000. For example, the CPU 1100 receives data from an input device, such as a keyboard or a mouse, via the input/output interface 1600. Furthermore, the CPU 1100 sends data to an output device, such as a display, a speaker, a printer, via the input/output interface 1600. Furthermore, the input/output interface 1600 may also function as a media interface that reads programs or the like recorded in a predetermined recording medium (media). An example of one of the media mentioned here includes an optical recording medium, such as a digital versatile disc (DVD) and a phase change rewritable disk (PD), a magneto-optical recording medium, such as magneto-optical disk (MO), a tape medium, a magnetic recording medium, a semiconductor memory, or the like.

For example, when the computer 1000 functions as the information processing apparatus according to the embodiments, the CPU 1100 in the computer 1000 implements the control unit 15 including the function of the selecting unit 15a, the editing unit 15b, the display control unit 15c, or the like by executing the program loaded on the RAM 1200. Furthermore, the HDD 1400 stores therein the programs related to the present disclosure or the data stored in the storage unit 14. Furthermore, the CPU 1100 reads the program data 1450 from the HDD 1400; however, as another example, the CPU 1100 may also acquire these programs from the other device via the external network 1550.

In the above, although the preferred embodiments of the present disclosure has been described in detail above with reference to the accompanying drawings, the technical scope of the present disclosure is not limited to the examples. It is obvious that those having ordinary knowledge in the technical field of the present disclosure can derive modified examples or revised examples within the scope of the technical ideas described in the claims and it is understood that they, of course, belong to the technical scope of the present disclosure.

Furthermore, the effects described herein are only explanatory or exemplary and thus are not definitive. In other words, the technique according to the present disclosure can achieve, together with the effects described above or instead of the effects described above, other effects obvious to those skilled in the art from the description herein.

Furthermore, it is also possible to create programs for allowing the hardware of a computer including a CPU, a ROM, and a RAM to implement functions equivalent to those held by the information processing apparatus 20 and it is also possible to provide a non-transitory computer readable recording medium in which the programs are recorded.

Furthermore, each of the steps related to the processes performed by the information processing apparatus described in this specification does not always need to be processed in time series in accordance with the order described in the flowchart. For example, each of the steps related to the processes performed by the information processing apparatus may also be processed in a different order from that described in the flowchart or may also be processed in parallel.

Furthermore, the following configurations are also within the technical scope of the present disclosure.

(1) An information processing apparatus comprising:

a detecting unit that detects, based on line of sight information that indicates a line of sight of a user, a gaze point of the user on a plurality of key objects that are used to input information and that are displayed by a display unit; and

a control unit that controls the display unit to display, by using a position of the detected gaze point as a reference, input candidate information that is associated with at least one of the plurality of key objects and that is selected based on the gaze point.

(2) The information processing apparatus according to (1), wherein the control unit controls the display unit so as to allow a position of the displayed input candidate information to follow the position of the gaze point.

(3) The information processing apparatus according to (1) or (2), wherein the control unit limits the number of pieces of the selected input candidate information to be displayed, that follows the position of the gaze point.

(4) The information processing apparatus according to any one of (1) to (3), wherein, when the number of pieces of the selected input candidate information is greater than an upper limit, the control unit limits the number of pieces of the selected input candidate information to be displayed to the number that is less than or equal to the upper limit.

(5) The information processing apparatus according to (4), wherein, when a state in which none of the plurality of key objects is not selected after the input candidate information is displayed is continued for a predetermined time, the control unit controls the display unit to delete at least a part of the displayed input candidate information.

(6) The information processing apparatus according to (2), wherein the control unit controls the display unit such that the selected input candidate information is adjacent to one of the plurality of key objects associated with a current position of the gaze point.

(7) The information processing apparatus according to (6), wherein

the selected input candidate information includes a plurality of pieces of input candidate information sequentially selected based on the gaze point, and

the control unit controls the display unit such that the latest input candidate information out of the plurality of pieces of input candidate information is adjacent to one of the plurality of key objects that is associated with the current position of the gaze point.

(8) The information processing apparatus according to (7), wherein the control unit controls the display unit such that the plurality of pieces of input candidate information is arranged in a predetermined direction in the order in which the plurality of pieces of input candidate information has been selected.

(9) The information processing apparatus according to (8), wherein

the predetermined direction is a horizontal direction, and
the control unit controls the display unit such that the plurality of pieces of input candidate information is adjacent on the left side of one of the plurality of key objects that is associated with the current position of the gaze point.

(10) The information processing apparatus according to (8), wherein

the predetermined direction is a vertical direction, and
the control unit controls the display unit such that the plurality of pieces of input candidate information is adjacent above one of the plurality of key objects that is associated with the current position of the gaze point.

(11) The information processing apparatus according to (8), wherein

the predetermined direction is a circumferential direction around one of the plurality of key objects that is associated with the current position of the gaze point, and
the control unit controls the display unit such that the plurality of pieces of input candidate information is arrayed clockwise along the circumferential direction in the order in which the plurality of pieces of input candidate information has been selected.

(12) The information processing apparatus according to (8), wherein
the control unit controls the display unit such that an end portion of the plurality of pieces of input candidate information is superimposed on another key object that is adjacent to one of the plurality of key objects that is associated with the current position of the gaze point.
(13) The information processing apparatus according to (6), wherein the control unit

displays the selected input candidate information into an input field,
superimposes the input field on at least one of the plurality of key objects, and
changes a relative positional relationship between the plurality of key objects and the input field such that one of the plurality of key objects that is associated with the current position of the gaze point is located inside the input field.

(14) The information processing apparatus according to (13), wherein the control unit changes a display position of the plurality of key objects without changing the display position of the input field.
(15) The information processing apparatus according to any one of (1) to (14), wherein the control unit controls the display unit such that the input candidate information is stereoscopically disposed in front of the key objects in a depth direction when viewed from the user.
(16) The information processing apparatus according to any one of (1) to (15), wherein the control unit controls the display unit to display

an input field outside a display range of the plurality of key objects, and
the input candidate information selected based on the gaze point into the input field.

(17) The information processing apparatus according to (16), wherein, when a predetermined condition related to the line of sight information is satisfied, the control unit maintains a display of at least a part of the input candidate information that is present in the input field while abbreviating or deleting at least the part of the display of the input candidate information that is present in the vicinity of the gaze point.
(18) The information processing apparatus according to any one of (1) to (17), wherein the control unit controls the display unit to display predictive input candidate information that is predicted based on the selected input candidate information and that can be selected based on the gaze point in the vicinity of the gaze point.
(19) The information processing apparatus according to any one of (1) to (18), wherein

the detecting unit detects a distance from a virtual plane that is set in a virtual space and that includes the plurality of key objects to a viewpoint position of the user in the virtual space, and
the control unit changes the number of pieces of data of the input candidate information based on the distance to the viewpoint position detected by the detecting unit.

(20) An information processing method that causes a computer to execute a process comprising:

detecting, based on line of sight information that indicates a line of sight of a user, a gaze point of the user on a plurality of key objects that are used to input information and that are displayed by a display unit; and controlling the display unit to display, by using a position of the detected gaze point as a reference, input candidate information that is associated with at least one of the plurality of key objects and that is selected based on the gaze point.

(21) A program that causes a computer to execute a process comprising:

detecting, based on line of sight information that indicates a line of sight of a user, a gaze point of the user on a plurality of key objects that are used to input information and that are displayed by a display unit; and controlling the display unit to display, by using a position of the detected gaze point as a reference, input candidate information that is associated with at least one of the plurality of key objects and that is selected based on the gaze point.

Reference Signs List

| | |
|---|---|
| 10 | head-mounted display (HMD) |
| 11 | display unit |
| 12 | detecting unit |
| 13 | communication unit |
| 14 | storage unit |
| 15 | control unit |
| 15a | selecting unit |
| 15b | editing unit |
| 15c | display control unit |
| 50 | operation input unit |
| 100 | input screen |
| 110 | keyboard |
| 111 | key object |
| 120 | input field |
| 130 | input candidate data |
| L | line of sight |
| P | input candidate point |
| U | user |

**Claims**

1. An information processing apparatus comprising:

a detecting unit that detects, based on line of sight information that indicates a line of sight of a user, a gaze point of the user on a plurality of key objects that are used to input information and that are displayed by a display unit; and
a control unit that controls the display unit to display, by using a position of the detected gaze point as a reference, input candidate information that is associated with at least one of the plurality of key objects and that is selected based on the gaze point.

2. The information processing apparatus according to claim 1, wherein the control unit controls the display unit so as to allow a position of the displayed input candidate information to follow the position of the gaze point.

3. The information processing apparatus according to claim 2, wherein the control unit limits the number of pieces of the selected input candidate information to be displayed, that follows the position of the gaze point.

4. The information processing apparatus according to claim 3, wherein, when the number of pieces of the selected input candidate information is greater than an upper limit, the control unit limits the number of pieces of the selected input candidate information to be displayed to the number that is less than or equal to the upper limit.

5. The information processing apparatus according to claim 4, wherein, when a state in which none of the plurality of key objects is not selected after the input candidate information is displayed is continued for a predetermined time, the control unit controls the display unit to delete at least a part of the displayed input candidate information.

6. The information processing apparatus according to claim 2, wherein the control unit controls the display unit such that the selected input candidate information is adjacent to one of the plurality of key objects associated with a current position of the gaze point.

7. The information processing apparatus according to claim 6, wherein

the selected input candidate information includes a plurality of pieces of input candidate information sequentially selected based on the gaze point, and
the control unit controls the display unit such that the latest input candidate information out of the plurality of pieces of input candidate information is adjacent to one of the plurality of key objects that is associated with the current position of the gaze point.

8. The information processing apparatus according to claim 7, wherein the control unit controls the display unit such that the plurality of pieces of input candidate information is arranged in a predetermined direction in the order in which the plurality of pieces of input candidate information has been selected.

9. The information processing apparatus according to claim 8, wherein

the predetermined direction is a horizontal direction, and
the control unit controls the display unit such that the plurality of pieces of input candidate information is adjacent on the left side of one of the plurality of key objects that is associated with the current position of the gaze point.

10. The information processing apparatus according to claim 8, wherein

the predetermined direction is a vertical direction, and
the control unit controls the display unit such that the plurality of pieces of input candidate information is adjacent above one of the plurality of key objects that is associated with the current position of the gaze point.

11. The information processing apparatus according to claim 8, wherein

the predetermined direction is a circumferential direction around one of the plurality of key objects that is associated with the current position of the gaze point, and
the control unit controls the display unit such that the plurality of pieces of input candidate information is arrayed clockwise along the circumferential direction in the order in which the plurality of pieces of input candidate information has been selected.

12. The information processing apparatus according to claim 8, wherein the control unit controls the display unit such that an end portion of the plurality of pieces of input candidate information is superimposed on another key object that is adjacent to one of the plurality of key objects that is associated with the current position of the gaze point.

13. The information processing apparatus according to claim 6, wherein the control unit

displays the selected input candidate information into an input field,
superimposes the input field on at least one of the plurality of key objects, and
changes a relative positional relationship between the plurality of key objects and the input field such that one of the plurality of key objects that is associated with the current position of the gaze point is located inside the input field.

14. The information processing apparatus according to claim 13, wherein the control unit changes a display position of the plurality of key objects without changing the display position of the input field.

15. The information processing apparatus according to claim 1, wherein the control unit controls the display unit such that the input candidate information is stereoscopically disposed in front of the key objects in a depth direction when viewed from the user.

16. The information processing apparatus according to claim 1, wherein the control unit controls the display unit to display

an input field outside a display range of the plurality of key objects, and
the input candidate information selected based on the gaze point into the input field.

17. The information processing apparatus according to claim 16, wherein, when a predetermined condition related to the line of sight information is satisfied, the control unit maintains a display of at least a part of the input candidate information that is present in the input field while abbreviating or deleting at least the part of the display of the input candidate information that is present in the vicinity of the gaze point.

18. The information processing apparatus according to claim 1, wherein the control unit controls the display unit to display predictive input candidate information that is predicted based on the selected input candidate information and that can be selected based on the gaze point in the vicinity of the gaze point.

19. The information processing apparatus according to claim 1, wherein

the detecting unit detects a distance from a virtual plane that is set in a virtual space and that includes the plurality of key objects to a viewpoint position of the user in the virtual space, and
the control unit changes the number of pieces of data of the input candidate information based on the distance to the viewpoint position detected by the detecting unit.

20. An information processing method that causes a computer to execute a process comprising:

detecting, based on line of sight information that indicates a line of sight of a user, a gaze point of the user on a plurality of key objects that are used to input information and that are displayed by a display unit; and
controlling the display unit to display, by using a position of the detected gaze point as a reference, input candidate information that is associated with at least one of the plurality of key objects and that is selected based on the gaze point.

21. A program that causes a computer to execute a process comprising:

detecting, based on line of sight information that indicates a line of sight of a user, a gaze point of the user on a plurality of key objects that are used to input information and that are displayed by a display unit; and
controlling the display unit to display, by using a position of the detected gaze point as a reference, input candidate information that is associated with at least one of the plurality of key objects and that is selected based on the gaze point.

# FIG.1

EP 3 951 560 A1

# FIG.2

FIG.3

# FIG.4

```
                    ( START )
                        │
                        ▼
                    ┌──────────────────────────────┐ ⌐S100
                    │  START TO DISPLAY INPUT SCREEN │
                    └──────────────────────────────┘
                        │
                        ▼
                    ┌──────────────────────────────┐ ⌐S101
          ┌────────▶│  DETECT INPUT CANDIDATE POINT BY │
          │         │        DETECTING UNIT         │
          │         └──────────────────────────────┘
          │             │
          │             ▼                  ⌐S102        NO
          │         ╱ IS INPUT ╲ ──────────────────────────────┐
          │        ╱ CANDIDATE POINT PRESENT ╲                  │
          │        ╲    ON KEYBOARD?    ╱                       │
          │         ╲              ╱                            │
          │             │ YES        ⌐S103                      │
          │             ▼                                       │
          │         ┌──────────────────────────────┐           │
          │         │  PERFORM KEY SELECTING PROCESS │          │
          │         └──────────────────────────────┘           │
          │             │                                       │
          │             ▼            ⌐S104     NO               │
          │         ╱ HAS SELECTION ╲ ──────────────┐          │
          │        ╱ OPERATION OF KEY OBJECT ╲        │          │
          │        ╲   BEEN DETECTED?   ╱             │          │
          │         ╲            ╱                    ▼          │
          │             │ YES   ⌐S105         ╱ IS PREDETERMINED ╲ ⌐S109  NO
          │             ▼                    ╲ TIME CONTINUED? ╱ ─────────┤
          │         ┌──────────────────────┐  ╲         ╱                │
          │         │ PERFORM EDITING PROCESS OF │  │ YES   ⌐S110         │
          │         │   SELECTED CHARACTER  │     ▼                       │
          │         └──────────────────────┘  ┌────────────────────┐     │
          │             │        ⌐S106        │ DELETE INPUT CANDIDATE DATA │   │
          │             ▼                      │   FROM INPUT SCREEN │      │
          │         ┌──────────────────────┐  └────────────────────┘     │
          │         │ UPDATE DISPLAY OF INPUT FIELD ON │  │   ⌐S111         │
          │         │     INPUT SCREEN     │     ▼                       │
          │         └──────────────────────┘  ┌────────────────────┐     │
          │             │        ⌐S107        │ COMPLETE TIME COUNT OF │    │
          │             ▼                      │  PREDETERMINED TIME │      │
          │         ┌──────────────────────┐  └────────────────────┘     │
          │         │ UPDATE DISPLAY CONTENT AND │     │                   │
          │         │ DISPLAY POSITION OF INPUT │      │                   │
          │         │    CANDIDATE DATA    │         │                   │
          │         └──────────────────────┘         │                   │
          │             │        ⌐S108               │                   │
          │             ▼                             │                   │
          │         ┌──────────────────────┐         │                   │
          │         │  START TIME COUNT OF │          │                   │
          │         │  PREDETERMINED TIME  │          │                   │
          │         └──────────────────────┘         │                   │
          │             │                             │                   │
          │             ▼◀────────────────────────────┘◀──────────────────┘
    NO    │         ╱            ╲  ⌐S112
    ┌─────┤        ╱ HAS END REQUEST ╲
    │     │        ╲ BEEN RECEIVED? ╱
    │     └─────────╲          ╱
    │                   │ YES   ⌐S113
    │                   ▼
    │               ┌──────────────────────────────┐
    │               │  CLOSE DISPLAY OF INPUT SCREEN │
    │               └──────────────────────────────┘
    │                   │
    │                   ▼
    │                ( END )
    └──────────────────────────────────
```

# FIG.5

EP 3 951 560 A1

# FIG.6

# FIG.7

131 → Appl —T3→ Appl ← 131

131a⌐ ▽

Appl ← 131d

T1⌐

T2⌐

131 → Appl* ⌐131b

131c⌐
┌─────────┐
│  Appl   │ ← 131
└─────────┘

# FIG.8

130 ↘
┌────┐
│ nice │
└────┘
111⌐

# FIG.9

130

I

I

NE

111

# FIG.10

130

very nic

e

111R

111

## FIG.11

130

nice

111

## FIG.12

very
nice

130

111

## FIG.13

## FIG.14

## FIG.15

# FIG.16

EP 3 951 560 A1

# FIG.17

| | | INTERNATIONAL SEARCH REPORT | International application No. |
|---|---|---|---|
| | | | PCT/JP2020/009681 |

**A. CLASSIFICATION OF SUBJECT MATTER**
Int.Cl. G06F3/01(2006.01)i, G06F3/023(2006.01)i, G06F3/0346(2013.01)i, G06F3/038(2013.01)i, G06F3/0484(2013.01)i
FI: G06F3/0484120, G06F3/038310A, G06F3/01510, G06F3/023460, G06F3/0346423
According to International Patent Classification (IPC) or to both national classification and IPC

**B. FIELDS SEARCHED**

Minimum documentation searched (classification system followed by classification symbols)
Int.Cl. G06F3/01, G06F3/023, G06F3/0346, G06F3/038, G06F3/0484

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | US 2017/0322623 A1 (GOOGLE INC.) 09.11.2017 (2017-11-09), fig. 5, 6 | 1-21 |
| A | US 2018/0307303 A1 (MAGIC LEAP, INC.) 25.10.2018 (2018-10-25), paragraph [0303], fig. 34 | 1-21 |
| A | JP 2018-032383 A (COLOPL INC.) 01.03.2018 (2018-03-01), entire text, all drawings | 1-21 |
| A | JP 2018-101019 A (SEIKO EPSON CORPORATION) 28.06.2018 (2018-06-28), entire text, all drawings | 1-21 |

☐ Further documents are listed in the continuation of Box C. ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21.05.2020 | 02.06.2020 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

<table>
<tr><td colspan="2" align="center">**INTERNATIONAL SEARCH REPORT**<br>Information on patent family members</td><td>International application No.<br>PCT/JP2020/009681</td></tr>
</table>

```
US 2017/0322623 A1 09.11.2017    WO 2017/192177 A1

US 2018/0307303 A1 25.10.2018    WO 2018/195099 A1
                                 CA 3059234 A1
                                 AU 2018256365 A
                                 KR 10-2019-0141696 A

JP 2018-032383 A    01.03.2018   (Family: none)

JP 2018-101019 A    28.06.2018   US 2018/0176547 A1
                                 CN 108205197 A
```

Form PCT/ISA/210 (patent family annex) (January 2015)

**EP 3 951 560 A1**

**Patent documents cited in the description**

- JP 11249804 A